(19) Europäisches Patentamt / European Patent Office / Office européen des brevets

(11) **EP 4 456 438 A1**

(12) **EUROPEAN PATENT APPLICATION**
published in accordance with Art. 153(4) EPC

(43) Date of publication:
**30.10.2024 Bulletin 2024/44**

(21) Application number: **22909903.1**

(22) Date of filing: **19.12.2022**

(51) International Patent Classification (IPC):
**H04B 1/04** (2006.01)

(52) Cooperative Patent Classification (CPC):
**H04B 1/04; H04W 24/02; H04W 28/16**

(86) International application number:
**PCT/CN2022/139837**

(87) International publication number:
**WO 2023/116590 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 CN 202111580765**

(71) Applicant: **VIVO MOBILE COMMUNICATION CO., LTD.**
**Dongguan, Guangdong 523863 (CN)**

(72) Inventors:
• **DING, Shengli**
  **Dongguan, Guangdong 523863 (CN)**
• **JIANG, Dajie**
  **Dongguan, Guangdong 523863 (CN)**
• **YUAN, Yannan**
  **Dongguan, Guangdong 523863 (CN)**

(74) Representative: **Lavoix**
**Bayerstraße 83**
**80335 München (DE)**

(54) **SENSING METHOD AND APPARATUS, SENSING CONFIGURATION METHOD AND APPARATUS, AND COMMUNICATION DEVICE**

(57)  This application discloses a sensing method and apparatus, a sensing configuration method and apparatus, and a communication device, pertaining to the field of sensing and communication technologies. The sensing method in an embodiment of this application includes: receiving, by a first device, a first echo signal of a first signal at a first moment based on first antenna aperture configuration information, where the first echo signal is sent by a second device; obtaining, by the first device, second antenna aperture configuration information based on a second echo signal at a second moment, in a case of determining based on the first echo signal that a sensing object is found; and receiving, by the first device, a third echo signal of the first signal at a third moment based on the second antenna aperture configuration information, where the third echo signal is sent by the second device; where the second moment is the same as the first moment or after the first moment; and the third moment is a moment after the second moment.

FIG. 2

EP 4 456 438 A1

**Description**

**CROSS-REFERENCE TO RELATED APPLICATIONS**

This application claims priority to Chinese Patent Application No. 202111580765.3, filed in China on December 22, 2021, which is incorporated herein by reference in its entirety.

**TECHNICAL FIELD**

This application pertains to the field of sensing and communication technologies and specifically relates to a sensing method and apparatus, a sensing configuration method and apparatus, and a communication device.

**BACKGROUND**

Radar detection is one of the important use cases of integrated sensing and communication. Due to the differences in constraints and application goals, radar technology in integrated sensing and communication scenarios has many differences from traditional radar technology. Currently, in integrated sensing and communication scenarios, how to perform adaptive adjustment of antenna aperture is not clear.

**SUMMARY**

Embodiments of this application provides a sensing method and apparatus, a sensing configuration method and apparatus, and a communication device, able to solve the problem of how to perform adaptive adjustment of antenna aperture, achieving the purpose of optimizing system performance and utilization of antenna resources.

According to a first aspect, a sensing method is provided, including:

receiving, by a first device, a first echo signal of a first signal at a first moment based on first antenna aperture configuration information, where the first echo signal is sent by a second device;
obtaining, by the first device, second antenna aperture configuration information based on a second echo signal at a second moment, in a case of determining based on the first echo signal that a sensing object is found; and
receiving, by the first device, a third echo signal of the first signal at a third moment based on the second antenna aperture configuration information, where the third echo signal is sent by the second device; where
the second moment is the same as the first moment or after the first moment; and the third moment is a moment after the second moment.

According to a second aspect, a sensing apparatus is provided, applied to a first device, including:

a first receiving module, configured to receive a first echo signal of a first signal at a first moment based on first antenna aperture configuration information, where the first echo signal is sent by a second device;
a first obtaining module, configured to obtain second antenna aperture configuration information based on a second echo signal at a second moment, in a case of determining based on the first echo signal that a sensing object is found; and
a second receiving module, configured to receive a third echo signal of the first signal at a third moment based on the second antenna aperture configuration information, where the third echo signal is sent by the second device; where
the second moment is the same as the first moment or after the first moment; and the third moment is a moment after the second moment.

According to a third aspect, a sensing configuration method is provided, including:

sending, by a sensing function network element, antenna aperture configuration information to a first device; where the antenna aperture configuration information includes at least one of the following: first antenna aperture configuration information and second antenna aperture configuration information.

According to a fourth aspect, a sensing configuration apparatus is provided, applied to a sensing function network element, including:

a first sending module, configured to send antenna aperture configuration information to a first device; where

the antenna aperture configuration information includes at least one of the following: first antenna aperture configuration information and second antenna aperture configuration information.

According to a fifth aspect, a communication device is provided, the communication device being a first device and including a processor and a memory, where the memory stores a program or instructions runnable on the processor, and when the program or instructions are executed by the processor, the steps of the method according to the first aspect are implemented.

According to a sixth aspect, a communication device is provided, the communication device being a first device and including a processor and a communication interface, where the communication interface is configured to receive a first echo signal of a first signal at a first moment based on first antenna aperture configuration information, where the first echo signal is sent by a second device; the processor is configured to obtain second antenna aperture configuration information based on a second echo signal at a second moment, in a case of determining based on the first echo signal that a sensing object is found; and the communication interface is configured to receive a third echo signal of the first signal at a third moment, where the third echo signal is sent by the second device; where the second moment is the same as the first moment or after the first moment; and the third moment is a moment after the second moment.

According to a seventh aspect, a communication device is provided, the communication device being a sensing function network element and including a processor and a memory, where the memory stores a program or instructions runnable on the processor, and when the program or instructions are executed by the processor, the steps of the method according to the third aspect are implemented.

According to an eighth aspect, a communication device is provided, the communication device being a sensing function network element and including a processor and a communication interface, where the communication interface is configured to send antenna aperture configuration information to a first device; where the antenna aperture configuration information includes at least one of the following: first antenna aperture configuration information and second antenna aperture configuration information.

According to a ninth aspect, a communication system is provided, including a first device and a sensing function network element, where the first device can be configured to execute the steps of the method according to the first aspect, and the sensing function network element is configured to execute the steps of the method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided. The chip includes a processor and a communication interface, the communication interface is coupled to the processor, and the processor is configured to run a program or instructions to implement the method according to the first aspect or the method according to the third aspect.

According to a twelfth aspect, a computer program product is provided, where the computer program product is stored in a storage medium, and the computer program/program product is executed by at least one processor to implement the steps of the method according to the first aspect.

In the embodiments of this application, in the case that a sensing object is found, the echo signals received from the previous moment or multiple previous moments can be used to obtain the antenna aperture configuration information for the next moment, so that the antenna aperture configuration information can be adjusted adaptively, which can optimize system performance and improve the utilization of antenna resources.

**BRIEF DESCRIPTION OF DRAWINGS**

FIG. 1 is a diagram of a selectable network architecture applicable to this application;
FIG. 2 is a schematic flowchart of a sensing method according to an embodiment of this application;
FIG. 3 is a schematic diagram showing an equivalent relationship between sparse and dense arrays;
FIG. 4 is a schematic diagram of signal to noise ratio (Signal to Noise ratio, SNR) calculations for a one-dimensional map;
FIG. 5 is a first schematic diagram showing a connection relationship between a sensing function network element, a terminal, and a base station;
FIG. 6 is a second schematic diagram showing a connection relationship between a sensing function network element, a terminal, and a base station;
FIG. 7 is a third schematic diagram showing a connection relationship between a sensing function network element, a terminal, and a base station;

FIG. 8 is a first schematic diagram of modules of a sensing apparatus according to an embodiment of this application;

FIG. 9 is a first schematic diagram of a structure of a first device according to an embodiment of this application;

FIG. 10 is a second schematic diagram of a structure of a first device according to an embodiment of this application;

FIG. 11 is a schematic flowchart of a sensing configuration method according to an embodiment of this application;

FIG. 12 is a schematic diagram of modules of a sensing configuration apparatus according to an embodiment of this application;

FIG. 13 is a schematic diagram of a structure of a sensing function network element according to an embodiment of this application; and

FIG. 14 is a schematic diagram of a structure of a communication device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6th Generation, 6G) communication system.

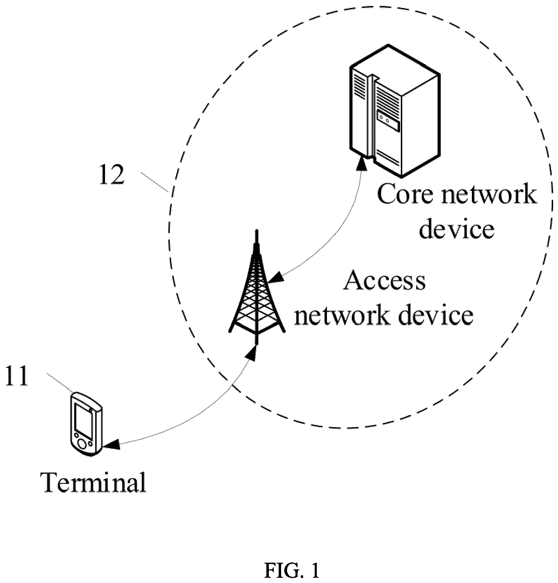

FIG. 1 is a block diagram of a wireless communication system to which the embodiments of this application may be applicable. The wireless communication system includes a terminal 11 and a network-side device 12. The terminal 11 can be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device can include base stations, wireless local area network (Wireless Local Area Networks, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and the specific type of the core network device is not limited.

The following first describes the related technologies involved in this application as follows:

Future 5th generation mobile communications (5G-and-Beyond, B5G) and 6G wireless communication systems are expected to provide various high-precision sensing services, such as indoor positioning for robot navigation, Wi-Fi sensing for smart homes, and radar sensing for autonomous vehicles. Sensing and communication systems are usually designed separately and occupy different frequency bands. However, due to the widespread deployment of millimeter wave and multiple-input multiple-output (Multiple-Input Multiple-Output, MIMO) technologies, communication signals in future wireless communication systems often have high resolution in both time and angular domains, making it possible to achieve high-precision sensing using communication signals. Therefore, it is best to jointly design sensing and communication systems so that they can share the same frequency band and hardware to improve frequency efficiency and reduce hardware costs. This has prompted research on integrated sensing and communication (Integrated Sensing and Communication, ISAC). ISAC will become a key technology in future wireless communication systems to support many important application scenarios. For example, in future autonomous vehicle networks, autonomous vehicles will obtain a large amount of information from the network, including ultra-high-resolution maps and near real-time information, for navigation and avoiding upcoming traffic congestion. In the same situation, radar sensors in autonomous vehicles should be able to provide powerful, high-resolution obstacle detection capabilities, with resolutions at the centimeter level. ISAC technology for autonomous vehicles provides the possibility of using the same hardware and spectrum resources to achieve high data rate communication and high-resolution obstacle detection. Other applications of ISAC include Wi-Fi-based indoor positioning and activity recognition, communication and sensing for unmanned aerial vehicles, extended reality (Extended Reality, XR), integrated radar and communication, among others. Each application has different requirements, constraints, and regulatory issues. ISAC has attracted tremendous research interest and attention from academia and industry. For example, there has been an increasing number of academic publications on ISAC, from transceiver architecture design, ISAC waveform design, joint coding design, time-frequency-space signal processing, to experimental performance latency, prototype design, and field testing.

Currently, typical integrated sensing and communication scenarios expected to be realized through technological upgrades based on the 5G communication system architecture are shown in Table 1.

**Table 1 Typical scenarios of integrated sensing and communication**

| Wireless sensing category | Sensing function | Application scenario |
|---|---|---|
| Large-scale macro sensing | Weather, air quality, and more | Meteorology, agriculture, life services |
| | Vehicle flow (intersections), pedestrian flow (subway entrances) | Smart city, intelligent transportation, commercial services |
| | Animal activities, migration, and more | Animal husbandry, ecological environmental protection, and more |
| | Target tracking, ranging, speed measurement, shape contour, and more | Many application scenarios of traditional radar |
| | 3D mapping | Smart driving, navigation, smart city |

(continued)

| Wireless sensing category | Sensing function | Application scenario |
|---|---|---|
| Close-range refined sensing | Action and posture recognition | Intelligent interaction of smartphones, games, smart homes |
| | Heartbeat, breathing, and more | Health, medical care |
| | Imaging, material detection, and more | Security inspection, industry, and more |

Radar is an abbreviation for radio detection and ranging, that is, discovering targets and determining target distances by transmitting radio waves and receiving target-reflected echo signals. With the development of radar technology, radar detection is used not only to measure the distance of the target but also includes measuring the speed, azimuth, and pitch of the target, as well as extracting more information about the target from the above information, including the size and shape of the target.

In wireless sensing applications of integrated sensing and communication, radar technology can adopt monostatic radar mode or bistatic radar mode.

In monostatic radar mode, the transmitted and received signals share an antenna, and the received signal and the transmitted signal enter different radio frequency processing chains through a circulator; in this mode, continuous wave signal waveforms can be used to achieve blind zone-free detection, provided that the received signal is well isolated from the transmitted signal, usually requiring about 100dB of isolation to eliminate the drowning of the received signal by the leaked transmitted signal. Since the receiver of monostatic radar has all the information of the transmitted signal, it can perform signal processing through matched filtering (pulse compression) to obtain a higher signal processing gain.

In bistatic radar mode, there is no isolation problem between transmitted and received signals, which greatly simplifies the complexity of the hardware. Since radar signal processing is based on known information, in 5G NR integrated sensing and communication applications, radar signal processing can utilize known information such as synchronization signals (primary synchronization signal (Primary Synchronization Signal, PSS)/secondary synchronization signal (Secondary Synchronization Signal, SSS), and reference signals (such as demodulation reference signal (Demodulation Reference Signal, DMRS)/channel state information-reference signal (Channel State Information-Reference Signal, CSI-RS)). However, due to the periodicity of synchronization signals and reference signals, the ambiguity diagram of the signal waveform is no longer pin-shaped but board-shaped, increasing the ambiguity of delay and Doppler and reducing the main lobe gain compared to monostatic radar mode, reducing the distance and speed measurement ranges. Through appropriate parameter set design, the distance and speed measurement ranges can meet the measurement needs of common targets such as cars and pedestrians. In addition, the measurement accuracy of bistatic radar is related to the position of the transmitting and receiving sites relative to the target, and it is necessary to select appropriate transmitting and receiving sites to improve detection performance.

The following detailed explanations of the sensing method and apparatus, sensing configuration method and apparatus, and communication device provided by the embodiments of this application are given through some examples and their application scenarios with reference to the drawings.

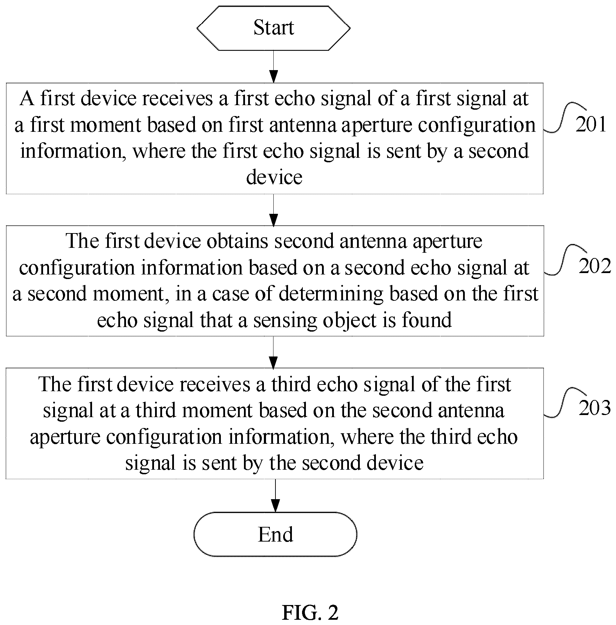

As shown in FIG. 2, an embodiment of this application provides a sensing method, including the following steps.

Step 201. A first device receives a first echo signal of a first signal at a first moment based on first antenna aperture configuration information, where the first echo signal is sent by a second device.

Step 202. The first device obtains second antenna aperture configuration information based on a second echo signal at a second moment, in a case of determining based on the first echo signal that a sensing object is found.

Step 203. The first device receives a third echo signal of the first signal at a third moment based on the second antenna aperture configuration information, where the third echo signal is sent by the second device.

It should be noted that the second moment is the same as the first moment or after the first moment; and the third moment is a moment after the second moment.

It should be noted that after the first device finds a sensing object based on the echo signal received based on the first antenna aperture configuration information, it can adjust the antenna aperture configuration information for the next moment based on the echo signals obtained from the previous moment or multiple previous moments, and then use the adjusted antenna aperture configuration information to receive the echo signal until the sensing process ends.

That is, in this application, in the case that a sensing object is found, the echo signals received from the previous moment or multiple previous moments can be used to determine the antenna aperture configuration information for the next moment, so that the antenna aperture configuration information can be adjusted adaptively according to the signal reception situation, which can optimize system performance and improve the utilization of antenna resources.

It should be noted that the first device refers to a receiving end (also called a receiving device) in the sensing communication process, which can be a base station, a transmission reception point (TRP), user equipment (User Equipment, UE), also known as a terminal, access point (Access Point, AP), reconfigurable intelligent surface (Reconfigurable Intelligence Surface, RIS), or the like.

It should be noted that the first antenna aperture configuration information mentioned in the embodiment of this application is the antenna aperture configuration information used by the first device in search mode; that is, the first device always uses the first antenna aperture configuration information to receive echo signals in search mode; the so-called search mode refers to the process of discovering targets (that is, the sensing objects) by traversing various angle intervals, and/or distance intervals, and/or speed intervals within a range specified by sensing prior information in a sensing request during the initial radar detection; once a target parameter is obtained, the search mode ends.

The target parameter includes at least one of the following: azimuth, pitch, distance, and speed.

Optionally, the first antenna aperture configuration information and the second antenna aperture configuration information include: an aperture setting method and an aperture offset value for a target direction.

The target direction includes at least one of the following: azimuth and pitch.

The aperture setting method includes at least one of the following:

> A11. antenna aperture;
> A12. antenna array arrangement method, where the antenna array arrangement method includes: dense array antenna or sparse array antenna; and
> A13. spacing between array elements.

Here it should be noted that for an antenna array with beamforming capability, the number of antenna array elements and the arrangement of array elements determine the beam width, thus determining the angle resolution. For a uniformly arranged antenna array, the angle resolution in azimuth or pitch can be expressed as:

$$\Delta\theta = \frac{k\lambda}{D\cos\theta}.$$

Here, D is the antenna aperture in azimuth or pitch, $\lambda$ is the wavelength, $\theta$ is the beam direction, and k is the beam width factor. For bistatic radar, the angle resolution depends on the receiving end. The aperture D includes two cases.

Case A: For dense array antennas, D=Nd; where

N is the number of antenna array elements in azimuth or pitch, and d is the spacing between antenna array elements,

Case B: For sparse array antennas, D depends on the distance between the two end elements in azimuth or pitch.

In a case that the spacing between the two end elements is the same, Case A and Case B have the same beam width, but their antenna gains are different (because the number of antenna array elements is different).

Optionally, in another embodiment of this application, the method of obtaining the first antenna aperture configuration information includes at least one of the following:

A21. The first device determines the first antenna aperture configuration information based on first information and antenna array hardware configuration information of the first device, where the first information includes at least one of the following: an angle resolution requirement in a sensing request, a lateral resolution requirement for radar imaging, and an operational distance requirement for radar imaging.

That is, the antenna aperture configuration information in search mode is determined by the receiving end based on the angle resolution requirement in the sensing request, or the lateral resolution requirement for radar imaging and the operational distance requirement for radar imaging, combined with the antenna array hardware configuration information of the first device.

It should be noted that the angle resolution refers to the minimum angle that radar detection can distinguish between two targets, in degrees or radians; the lateral resolution of radar imaging refers to the minimum distance that radar imaging can distinguish between two targets perpendicular to the line of sight, in meters; the operational distance of radar imaging refers to the target distance at which radar can detect or image target parameters to meet predetermined performance indicator levels, in meters.

Optionally, a specific implementation in this case can be:

determining a first angle resolution based on the first information; determining, based on the first angle resolution, a first aperture setting method in an angle resolution to aperture setting method correspondence table corresponding to the antenna array hardware configuration information of the first device; and determining an aperture offset value corresponding to the first aperture setting method and an occupancy situation of antenna array elements based on the first aperture setting method.

The angle resolution to aperture setting method correspondence table provides a correspondence between the angle resolution that can be achieved and the required aperture setting method under a given antenna array hardware configuration; and the given antenna array hardware configuration includes: number of antenna array elements, spacing between antenna array elements, and signal carrier wavelength.

Optionally, the first angle resolution satisfies at least one of the following:

B11. Value of the first angle resolution is less than or equal to the angle resolution requirement in the sensing request.

It should be noted that usually, the angle resolution corresponding to the antenna aperture configuration in search mode (corresponding to the first angle resolution mentioned above) should be less than or equal to the angle resolution requirement in the sensing request; that is, $\Delta\theta \leq \Delta\theta^0$, where $\Delta\theta^0$ represents the angle resolution requirement in the input sensing request, and $\Delta\theta$ represents the angle resolution corresponding to the antenna aperture configuration in search mode.

Here it should be noted that the setting principle for the antenna aperture in search mode is:

if the angle resolution requirement is high (a small $\Delta\theta$ value), the antenna aperture D is set to a large value; and
if the angle resolution requirement is low (a large $\Delta\theta$ value), the antenna aperture D is set to a small value.

Specifically, the angle resolution is divided into azimuth angle resolution and pitch angle resolution, and the aperture settings in azimuth and pitch can be performed separately, that is, if the angle resolution requirement is high in a certain direction, the antenna aperture in the corresponding direction is set to a large value, and otherwise, the antenna aperture in the corresponding direction is set to a small value.

B12. Value of the first angle resolution is less than or equal to a ratio of the lateral resolution requirement for radar imaging to the operational distance requirement for radar imaging.

It should be noted that in applications such as radar imaging or 3D reconstruction, the sensing request requires the lateral distance resolution of the sensing object, with $\Delta Lcross=\Delta\theta \cdot R$, where R in search mode is the operational distance requirement for radar imaging, and $\Delta Lcross$ is the lateral resolution requirement for radar imaging. Therefore, in these scenarios, the requirement for angle resolution should consider both the lateral distance resolution requirement for radar imaging and the operational distance requirement for radar imaging in the sensing request, which should satisfy:

$$\Delta\theta \leq \frac{\Delta L_{cross}}{R}.$$

Here it should be noted that optionally, in specific use, the angle resolution corresponding to the antenna aperture configuration in search mode can be determined based on B11 alone, or both B11 and B12 can be used to determine the angle resolution corresponding to the antenna aperture configuration in search mode.

Optionally, a method of determining the first aperture setting method in the angle resolution to aperture setting method correspondence table corresponding to the antenna array hardware configuration information of the first device based on the first angle resolution can be:

Determine a first aperture setting method corresponding to the first angle resolution in the angle resolution to aperture setting method correspondence table corresponding to the antenna array hardware configuration information of the first device based on a first selection criterion,

First, it should be noted that because different devices may have different antenna array hardware configurations, the angle resolution to aperture setting method correspondence table should correspond to the antenna array hardware configuration, that is, the angle resolution to aperture setting method correspondence tables corresponding to different antenna array hardware configurations should be different.

Optionally, the antenna array hardware configuration information includes:

numbers of array elements in azimuth and pitch of the antenna array, spacing between array elements, and indexes of available antenna array elements.

Here it should be noted that the available antenna array elements refer to the remaining antenna array elements after occupancy by other services, which can also be understood as the antenna array elements that the receiving end can use in this sensing process.

Optionally, the first selection criterion includes at least one of the following:

B21. In a case that there is no angle prior information of the sensing object in the sensing request or accuracy of the angle prior information of the sensing object is greater than a first preset value, use of sparse array antennas is disabled.

It should be noted that a higher angle resolution requirement leads to a smaller value of angle prior information accuracy, and a lower angle resolution requirement leads to a larger value of angle prior information accuracy.

That is, in the case of no angle prior information or low accuracy of angle prior information, the sparse array option is disabled; because sparse array antennas have grating lobes, there is an ambiguity problem in angle-based detection when the angle is unknown.

B22. In a case that the accuracy of the angle prior information of the sensing object is less than or equal to the first preset value, and the antenna array hardware configuration information of the first device meets a first condition, use priority of dense array antennas is set to be higher than that of sparse array antennas.

It should be noted that the first condition is that an antenna aperture created by continuously arranged available antenna array elements is greater than or equal to an antenna aperture in the aperture setting method, that is, meeting the first condition can be understood as antenna array hardware resources of the first device being sufficient.

That is, in the case of sufficient antenna array hardware resources, the use of dense array options is prioritized to avoid the impact of grating lobes from sparse arrays; or, the use of sparse arrays with an element spacing less than a preset value is restricted, for example, arrays with an element spacing less than or equal to 3 times the half-wavelength coefficient can be used.

B23. In a case that the accuracy of the angle prior information of the sensing object is less than or equal to the first preset value, and the antenna array hardware configuration information of the first device does not meet the first condition, use of sparse array antennas is enabled.

That is, in the case of insufficient antenna array hardware resources, the sparse array option can be used, and the problem of grating lobes from sparse arrays can be reduced through signal processing methods.

A22. The first device determines the first antenna aperture configuration information based on an antenna aperture recommendation value sent by the second device and the antenna array hardware configuration information of the first device.

It should be noted that in this case, the second device needs to send the antenna aperture recommendation value to the first device first, and the second device refers to a transmitting end (also called a transmitting device) in the sensing communication process, which can be a base station, TRP, UE, AP, RIS, or the like.

Specifically, the second device can obtain the antenna aperture recommendation value according to the method of A21 mentioned above, where because the second device does not know the occupancy situation of the antenna array of the first device, that is, when using the angle resolution to obtain the specific aperture setting method, because one aperture setting method may correspond to multiple aperture offset values, the second device will recommend multiple aperture offset values to the first device, and then the second device will combine its own antenna array element occupancy situation to determine which specific aperture offset value to use.

A23. The first device receives the first antenna aperture configuration information sent by a sensing function network element.

It should be noted that in this case, the sensing function network element determines the antenna aperture configuration information in search mode based on the method of A21 mentioned above and then sends the antenna aperture configuration information to the first device.

Here it should be noted that if the sensing function network element configures the first antenna aperture configuration information, then the sensing function network element or another network node that the sensing function network element can access should store the antenna array hardware configuration of sensing nodes (that is, receiving ends) scheduled by the sensing function network element; or, after the sensing function network element selects a sensing node to execute the sensing process and sends sensing request information to the sensing node, the sensing node feeds back its antenna array hardware configuration to the sensing function network element.

For example, an adaptive method of antenna aperture is described with reference to a 64-antenna NR, where considering a 64-antenna hardware arrangement of $8 \times 8$, the aperture in azimuth can be set to include widths of 1 to 8 antenna array elements, and the aperture in pitch can be set to include widths of 1 to 8 antenna array elements.

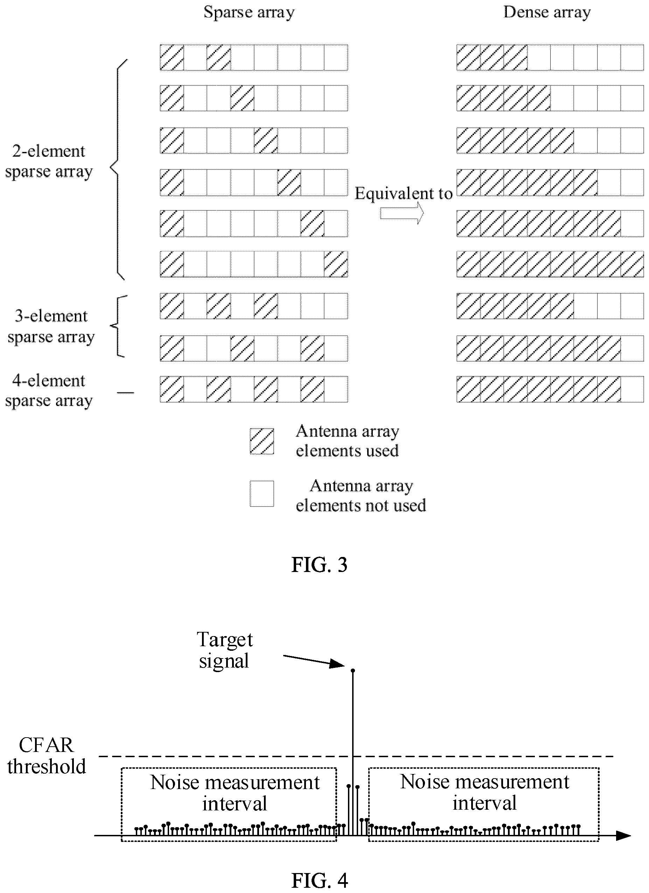

For scenarios with an aperture width of 2 to 4 antenna array elements in azimuth or pitch, there are also two cases, namely, dense array and sparse array, and they are equivalent in angle resolution, as shown in FIG. 3:

2-element sparse array: Depending on the element spacing, when there are 2 to 7 element spacings between 2 elements, they can be equivalent to a dense array of 3 to 8 elements;
3-element sparse array: Depending on the element spacing, when there are 2 element spacings between adjacent elements, it can be equivalent to a 5-element dense array, and when there are 3 element spacings between adjacent elements, it can be equivalent to a 7-element dense array; and
4-element sparse array: When there are 2 element spacings between adjacent elements, it can be equivalent to a 7-element dense array;

Therefore, the angle resolution in azimuth or pitch can be set in 8 grades, as shown in Table 2.

**Table 2 Example of the relationship between angle resolution and aperture setting method**

| Aperture D | Angle resolution | Aperture setting | |
|---|---|---|---|
| | | Dense array | Sparse array |
| d | $1 \times k\lambda/(d\cos\theta)$ | Option 1: 1-element | - |
| 2d | $1/2 \times k\lambda/(d\cos\theta)$ | Option 2: 2-element | - |
| 3d | $1/3 \times k\lambda/(d\cos\theta)$ | Option 3a: 3-element | Option 3b: 2-element sparse array (spacing 2 elements) |
| 4d | $1/4 \times k\lambda/(d\cos\theta)$ | Option 4a: 4-element | Option 4b: 2-element sparse array (spacing 3 elements) |
| 5d | $1/5 \times k\lambda/(d\cos\theta)$ | Option 5a: 5-element | Option 5b: 2-element sparse array (spacing 4 elements) Option 5c: 3-element sparse array (spacing 2 elements) |
| 6d | $1/6 \times k\lambda/(d\cos\theta)$ | Option 6a: 6-element | Option 6b: 2-element sparse array (spacing 5 elements) |
| 7d | $1/7 \times k\lambda/(d\cos\theta)$ | Option 7a: 7-element | Option 7b: 2-element sparse array (spacing 6 elements) Option 7c: 3-element sparse array (spacing 3 elements) Option 7d: 4-element sparse array (spacing 2 elements) |
| 8d | $1/8 \times k\lambda/(d\cos\theta)$ | Option 8a: 8-element | Option 8b: 2-element sparse array (spacing 7 elements) |

As shown in Table 2, under the condition of an 8×8 antenna hardware arrangement, there are 17 options for aperture setting in azimuth or pitch, which can be set with 4 bits.

In addition, for a given aperture setting, the hardware selection of antenna array elements can be represented with 3 bits for azimuth aperture offset and 3 bits for pitch aperture offset; the aperture offset refers to the offset value of the set aperture relative to one end of the azimuth or pitch antenna array, and the aperture offset values are shown in Table 3.

**Table 3 Correspondence between aperture settings and aperture offset values**

| Option | Aperture offset values |
|---|---|
| Option 1 | 0, 1, 2, 3, 4, 5, 6, 7 |
| Option 2 | 0, 1, 2, 3, 4, 5, 6 |
| Option 3a/3b | 0, 1, 2, 3, 4, 5 |
| Option 4a/4b | 0, 1, 2, 3, 4 |
| Option 5a/5b/5c | 0, 1, 2, 3 |
| Option 6a/6b | 0, 1, 2 |
| Option 7a/7b/7c/7d | 0, 1 |
| Option 8a/8b | 0 |

Therefore, for the two directions of azimuth and pitch, a total of 14 bits can be used to transmit the aperture configuration information, for example, as shown in Table 4.

**Table 4 Example of aperture configuration information**

| Azimuth aperture setting | Azimuth aperture offset | Pitch aperture setting | Pitch aperture offset |
|---|---|---|---|
| Bit 0 to bit 3 | Bit 4 to bit 6 | Bit 7 to bit 10 | Bit 11 to bit 13 |

It should be noted that Table 4 describes a case where the aperture setting and aperture offset are set separately. The aperture setting and aperture offset can also be combined for encoding configuration (that is, joint encoding of aperture setting method and aperture offset value) to reduce the number of bits occupied by the aperture configuration information. The specific implementation of joint coding is exemplified as follows: for example, option 1 has 1 aperture setting and 8 aperture offsets for a total of 8 cases, option 2 has 1 aperture setting and 7 aperture offsets for a total of 7 cases, option 3 has 2 aperture settings and 6 aperture offsets for a total of 12 cases, option 4 has 2 aperture settings and 5 aperture offsets for a total of 10 cases, option 5 has 3 aperture settings and 4 aperture offsets for a total of 12 cases, option 6 has 2 aperture settings and 3 aperture offsets for a total of 6 cases, option 7 has 4 aperture settings and 2 aperture offsets for a total of 8 cases, and option 8 has 2 aperture settings and 1 aperture offset for a total of 2 cases. Therefore, there are 65 cases in total, which can be transmitted with 7 bits.

That is, in a case that the antenna aperture configuration information is sent by a sensing function network element, the sensing function network element indicates the antenna aperture configuration information in at least one of the following ways:

B31. The aperture setting method and aperture offset value are jointly encoded.

That is, in this case, the aperture setting and aperture offset are combined for encoding configuration to reduce the number of bits occupied by the aperture configuration information.

B32. The aperture setting method and aperture offset value are identified with different bits.

That is, in this case, the aperture setting and aperture offset are set separately.

Further, it should be noted that after the receiving end finds the sensing object, it continuously detects the sensing object, which can be considered as entering the tracking mode, that is, the tracking mode refers to a process of continuously detecting a sensing object at a parameter of the sensing object, or within a certain range containing the parameter of the sensing object, after the sensing object is found through search mode and the parameter of the sensing object is obtained, and updating the parameter of the sensing object with the detection results.

Optionally, in another embodiment of this application, step 202 can be implemented in one of the following ways:

A31. The first device performs radar signal processing on a second echo signal received at the second moment to determine measurement quantities; and the first device determines the second antenna aperture configuration information based on the measurement quantities.

Optionally, the determining the second antenna aperture configuration information based on the measurement quantities can be implemented in one of the following ways:

A311. The first device determines the second antenna aperture configuration information based on distance and angle of the sensing object relative to the first device obtained from the measurement quantities.

Optionally, the specific process of this implementation is: the first device determines a distance and angle segment corresponding to the distance and angle of the sensing object relative to the first device obtained from the measurement quantities; and the first device determines the second antenna aperture configuration information in a distance and angle segment to aperture setting correspondence table based on a second selection criterion and the distance and angle segment.

The distance and angle segment to aperture setting correspondence table provides a correspondence between the distances and angle of the sensing object that can meet a preset lateral resolution requirement for radar imaging and the aperture setting method under a given antenna array hardware configuration; and the given antenna array hardware configuration includes: number of antenna array elements, pacing between antenna array elements, and signal carrier wavelength.

It should be noted that the second selection criterion includes at least one of the following:

B41. In a case that echo signal quality corresponding to the second echo signal is greater than or equal to a second preset value, and the antenna array hardware configuration information of the first device meets the first condition, use priority of dense array antennas is set to be higher than that of sparse array antennas.

That is, in the case of sufficient antenna array hardware resources, the use of dense array options is prioritized to avoid the impact of grating lobes from sparse arrays; or, the use of sparse arrays with an element spacing less than a preset value is restricted, for example, arrays with an element spacing less than or equal to 3 times the half-wavelength coefficient can be used.

B42. In a case that the echo signal quality corresponding to the second echo signal is greater than or equal to the second preset value, and the antenna array hardware configuration information of the first device does not meet the first condition, use of sparse array antennas is enabled.

That is, in the case of insufficient antenna array hardware resources, the sparse array option can be used, and the problem of grating lobes from sparse arrays can be reduced through signal processing methods.

It should be noted that in tracking mode, the choice between dense array antennas and equivalent sparse array antennas is made based on the echo signal quality, where, when the echo signal quality is high (greater than or equal to a set value), the error in the distance and/or angle of the sensing object measured from the reflected echo signal is small, and stable tracking of the sensing object can be maintained; in this case, sparse arrays can be used, and B41 and B42 should be followed.

B43. In a case that the echo signal quality corresponding to the second echo signal is less than the second preset value, use of sparse array antennas is disabled.

That is, when the echo signal quality is low (less than a preset value), the error in the distance and/or angle of the sensing object measured from the reflected echo signal is large, and it is difficult to maintain stable tracking of the sensing object; in this case, sparse array antennas should be disabled to avoid the impact of grating lobes from sparse arrays.

In tracking mode, in applications such as radar imaging or 3D reconstruction, as the sensing object or the detection device itself moves, the relative distance between the detection device and the sensing object changes. In addition, when the sensing object moves away from the antenna normal, the beam broadening effect will also reduce the angle resolution. To maintain the lateral distance resolution of imaging, the angle resolution should be adaptively adjusted according to the change in the distance of the sensing object, that is, the antenna aperture should be adjusted, which should satisfy:

When the distance between the sensing node (that is, the receiving end in the sensing process) and the sensing object increases, and/or, the sensing object deviates from the antenna normal of the sensing node, the angle resolution should be increased (reduce the numerical value of the angle resolution), that is, increase the antenna aperture, to maintain the lateral distance resolution of radar imaging.

When the distance between the sensing node and the sensing object decreases, and/or, the sensing object approaches the antenna normal of the sensing node, the angle resolution can be reduced (increase the numerical value of the angle resolution), that is, reduce the antenna aperture, to release part of the antenna resources.

The adjustment of the antenna aperture includes:

adjusting the number of antenna array elements, where in the case of dense arrays, adjusting the number of antenna array elements is equivalent to adjusting the corresponding antenna aperture; and

adjusting the spacing between antenna array elements, where due to the equivalent relationship between sparse array antennas and dense array antennas mentioned above, the antenna aperture can be adjusted by adjusting the spacing between antenna array elements.

For example, link adaptive adjustment of the antenna aperture can be performed per segment based on the relative distance R between the sensing object and the radar and the angle θ (beam direction) of the sensing object relative to the receiving end in tracking mode, combined with the hardware configuration of the antenna array. Each segment should satisfy:

$$\frac{k\lambda}{D\cos\theta} \leq \frac{\Delta L_{cross}}{R}.$$

Still taking the above-mentioned 8×8 antenna array as an example, the per-segment link adaptive adjustment of the aperture setting based on the target distance and angle is shown in Table 5.

**Table 5 Example of the correspondence between distance and angle and aperture setting method**

| Relative distance R segment | Aperture setting D |
|---|---|
| $\dfrac{R}{\cos\theta} \leq \dfrac{\Delta L_{cross}d}{k\lambda}$ | Option 1 |
| $\dfrac{\Delta L_{cross}d}{k\lambda} < \dfrac{R}{\cos\theta} \leq \dfrac{2\Delta L_{cross}d}{k\lambda}$ | Option 2 |
| $\dfrac{2\Delta L_{cross}d}{k\lambda} < \dfrac{R}{\cos\theta} \leq \dfrac{3\Delta L_{cross}d}{k\lambda}$ | Option 3a/3b |
| $\dfrac{3\Delta L_{cross}d}{k\lambda} < \dfrac{R}{\cos\theta} \leq \dfrac{4\Delta L_{cross}d}{k\lambda}$ | Option 4a/4b |

(continued)

| Relative distance R segment | Aperture setting D |
|---|---|
| $$\frac{4\Delta L_{cross}d}{k\lambda} < \frac{R}{\cos\theta} \le \frac{5\Delta L_{cross}d}{k\lambda}$$ | Option 5a/5b/5c |
| $$\frac{5\Delta L_{cross}d}{k\lambda} < \frac{R}{\cos\theta} \le \frac{6\Delta L_{cross}d}{k\lambda}$$ | Option 6a/6b |
| $$\frac{6\Delta L_{cross}d}{k\lambda} < \frac{R}{\cos\theta} \le \frac{7\Delta L_{cross}d}{k\lambda}$$ | Option 7a/7b/7c/7d |
| $$\frac{R}{\cos\theta} > \frac{7\Delta L_{cross}d}{k\lambda}$$ | Option 8a/8b |

In use, the receiving end only needs to determine at least one antenna aperture configuration information based on the distance and angle segment in the distance segmentation example table for link adaptive adjustment of the antenna aperture (that is, the distance and angle segment to aperture setting correspondence table), and then combine the second selection criterion to select one antenna aperture configuration information from the determined at least one antenna aperture configuration information as the second antenna aperture configuration information.

It should be noted that when the implementation A311 is used, it is assumed that the distance and angle of the sensing object relative to the first device in the next moment will not change much compared to the current moment, and it is still in the same distance and angle segment, and the antenna aperture for the next moment can be set according to Table 5.

A312. The first device predicts distance and angle of the sensing object relative to the first device, and determines the second antenna aperture configuration information based on predicted values of the distance and angle of the sensing object relative to the first device.

It should be noted that the specific implementation process under this implementation method can be: the first device determines the distance and angle segment corresponding to the predicted values of the distance and angle of the sensing object relative to the first device; and the first device determines the second antenna aperture configuration information in a distance and angle segment to aperture setting correspondence table based on a third selection criterion and the distance and angle segment.

It should be noted that this method is based on a certain algorithm to predict the distance and angle of the sensing object relative to the first device in the next moment, and with these predicted values, the antenna aperture for the next moment is set according to Table 5.

It should be noted that the prediction of the distance and angle of the sensing object relative to the first device in the next moment is based on maintaining the motion trajectory of the sensing object and performing filtering prediction.

The premise of the prediction method is: when tracking a sensing object, since the typical sensing objects (such as vehicles and pedestrians) in integrated sensing and communication applications are low-speed sensing objects relative to the sensing update rate, the state change of the sensing object between two adjacent radar detections is small. The small change in the state of the sensing object mainly refers to the small change in the radar cross-section (Radar Cross Section, RCS) of the sensing object, which can be considered that the RCS of the sensing object remains almost unchanged in two adjacent or several consecutive radar detections. There are two conditions to meet this situation: one is that the sensing object has little maneuverability, that is, the acceleration is small, and the position and speed of the sensing object do not change much, in which case linear filtering algorithms such as Kalman filtering can be used; the second is that the sensing channel characteristics (large-scale and small-scale fading characteristics) do not change much, especially the small-scale fading characteristics do not change much.

It should be noted that the prediction method pertains to device implementation, which is not limited in this application.

Here, the third selection criterion includes at least one of the following:

B51. In a case that a predicted value of echo signal quality is greater than or equal to a third preset value, and the antenna array hardware configuration information of the first device meets the first condition, use priority of dense array antennas is set to be higher than that of sparse array antennas.

B52. In a case that the predicted value of echo signal quality is greater than or equal to the third preset value, and the antenna array hardware configuration information of the first device does not meet the first condition, use of sparse array antennas is enabled.

B53. In a case that the predicted value of echo signal quality is less than the third preset value, use of sparse array antennas is disabled.

It should be noted that the application of the third selection criterion is similar to that of the second selection criterion, and will not be repeated herein.

A32. The first device performs a first operation, and the first device receives the second antenna aperture configuration information fed back by the sensing function network element.

It should be noted that the first operation includes one of the following:

B61. The first device performs radar signal processing on the second echo signal received at the second moment to determine measurement quantities and sends the measurement quantities to the sensing function network element.

It should be noted that in this case, the sensing function network element determines the second antenna aperture configuration information based on the measurement quantities, and specifically, the sensing function network element can use the method of A311 or A312 mentioned above to determine this, which will not be repeated herein.

B62. The first device sends the second echo signal received at the second moment to the sensing function network element.

It should be noted that in this case, the sensing function network element performs radar signal processing based on the second echo signal to determine the measurement quantities first, and then determines the second antenna aperture configuration information based on the measurement quantities, and specifically, the sensing function network element can use the method of A311 or A312 mentioned above to determine this, which will not be repeated herein.

B63. The first device performs part of calculations in radar signal processing to obtain a first part of measurement quantities from the second echo signal received at the second moment and sends the first part to the sensing function network element; the first part is a part that belongs to a first level among parts of different levels contained in the measurement quantities. It should be noted that the first level can be understood as a lower level part of measurement quantities that can be directly processed by the first device based on the echo signal.

It should be noted that in this case, the sensing function network element first determines a second part of measurement quantities (the second part is a part in the measurement quantities that belongs to a second level among the parts of different levels, that is, a higher level part) based on the first part of measurement quantities, and then it can determine the second antenna aperture configuration information based on the complete measurement quantities. Specifically, the sensing function network element can use the method of A311 or A312 mentioned above to determine this, which will not be repeated herein.

It should be noted that when the first device only sends the first part of measurement quantities, different contents of the measurement quantities are graded. Specifically,

The measurement quantities and their grading include one of the following:

C11. Primary measurement quantities: These refer to measurement quantities that can be directly obtained by the sensing node's receiver after processes such as antenna coupling, amplification, down-conversion, filtering, AGC, A/D sampling, digital down-conversion, and digital filtering, including: complex signals (including I and Q channels), signal amplitude, signal phase, signal power, polarization information, and the like, as well as threshold detection results, and maximum/minimum value extraction results of the above measurement quantities;

C12. Secondary measurement quantities: These refer to measurement quantities that can be obtained after simple operations (including: addition, subtraction, multiplication, division, matrix addition, subtraction, multiplication, matrix transpose, trigonometric operations, square root operations, power operations, and the like, as well as threshold detection results, and maximum/minimum value extraction results of the above operations) of the primary measurement quantities, including: amplitude ratio, phase difference, received signal arrival angle (Angle-of-Arrival, AOA), transmitted signal departure angle (Angle-of-Departure, AOD), delay (distance) information, distance difference, and angle difference;

C13. Tertiary measurement quantities: These refer to measurement quantities that can be obtained after complex operations (including: fast fourier transform/inverse fast fourier transform (Fast Fourier Transform/Inverse Fast Fourier Transform, FFT/IFFT), Discrete Fourier Transformation/Inverse Discrete Fourier Transform (Discrete Fourier Transformation/Inverse Discrete Fourier Transform, DFT/IDFT), 2D-FFT, 3D-FFT, matched filtering, autocorrelation operations, wavelet transform, digital filtering, and the like, as well as threshold detection results, and maximum/minimum value extraction results of the above operations) of the primary and/or secondary measurement quantities, including: FFT (or IFFT) operation results of complex signal (or signal amplitude, or signal phase) or its maximum value data point, power spectrum or its maximum value data point, Doppler shift (speed), Doppler spread, speed difference, delay-Doppler two-dimensional map or its maximum value data point, radar one-dimensional imaging map or its maximum value data point, radar two-dimensional imaging map or its maximum value data point, synthetic aperture radar (Synthetic Aperture Radar, SAR) imaging map or its maximum value data point, and so on.

It should be noted that the level of primary measurement quantities is lower than that of secondary measurement quantities, and the level of secondary measurement quantities is lower than that of tertiary measurement quantities; and optionally, the first part mentioned above can include primary measurement quantities, or both primary and secondary measurement quantities.

The grading of measurement quantities has at least one of the following characteristics:

C21. In different sensing use cases, depending on the scenario, primary measurement quantities, secondary measurement quantities, and tertiary measurement quantities may all be the final sensing results, or may be none of the final sensing results and require further processing to obtain the final sensing results.

C22. In different sensing use cases, depending on the sensing target parameter and sensing method, only primary measurement quantities may be needed (for example, people/vehicle flow monitoring based on Received Signal Strength (Received Signal Strength, RSS)), or only primary and secondary measurement quantities may be needed (for example, radar ranging), or primary, secondary, and tertiary measurement quantities may be needed simultaneously (for example, radar imaging).

C23. In different sensing scenarios, depending on the computing power of the devices executing the sensing process such as a sensing node, sensing function network element, core network, and application server, and the requirements for sensing indicators, different levels of measurement quantities can be calculated in the same device, or in different devices among the sensing node, sensing function network element, core network, and application server. For example:

C231. If the sensing node (such as a base station) executing the sensing process has strong computing power, and the data volume of the sensing measurement quantities is large (transmission time cost is large), and the sensing request has high requirements for sensing delay, then the secondary and/or tertiary measurement quantity calculations can be completed in the sensing node, and the calculation results can be sent to the sensing function network element, core network, and application server.

C232. If the sensing node (such as an IoT terminal) executing the sensing process has weak computing power, and the data volume of the sensing measurement quantities is large (transmission time cost is large), and the sensing request has no high requirements for sensing delay but has high requirements for sensing accuracy, then the primary measurement quantity calculations can be completed in the sensing node, and the calculation results can be sent to the sensing function network element, core network, and application server, which will perform the secondary and/or tertiary measurement quantity calculations.

C233. If the data volume of the sensing measurement quantities is small (transmission time cost is small), then under the scheduling of the core network or application server, any level of measurement quantity calculations can be completed in the sensing node or sensing function network element or core network or application server.

It should be noted that the radar signal processing mentioned in the embodiment of this application includes at least one of the following:

B71. Matched filtering (pulse compression) processing.

Optionally, the matched filtering processing includes at least one of the following:

B711. Segmenting a known transmitted signal sequence to generate matched filters, and performing matched filtering processing on the reflected echo signal of the sensing object in segments; and

B712. Performing sliding window correlation processing the reflected echo signal of the sensing object for the known transmitted signal.

B72. One-dimensional Fast Fourier Transform FFT processing.

It should be noted that if the sensing request only requires the distance or speed information of the sensing object, only one-dimensional FFT processing is needed, including one of the following:

B721. Fast time dimension one-dimensional FFT processing to extract target distance information; and

B722. Slow time dimension one-dimensional FFT processing to extract target speed information.

B73. Two-dimensional FFT processing.

It should be noted that if the sensing request requires both distance and speed information of the sensing object, two-dimensional FFT processing is needed, that is, fast time dimension FFT and slow time dimension FFT.

B74. Three-dimensional FFT processing.

It should be noted that if the sensing request requires distance, speed, and angle information of the sensing object, three-dimensional FFT processing is needed, that is, fast time dimension FFT, slow time dimension FFT, and angle dimension FFT.

B75. Angle filtering processing.

It should be noted that angle filtering processing includes algorithms such as matrix eigen space decomposition (Multiple Signal Classification, MUSIC) and robust beamforming adaptive optimization based on environmental cognition (Estimation of Signal Parameters using Rotational Invariance Techniques, ESPRIT) to improve the accuracy of angle sensing.

It should also be noted that in a case of multiple sensing objects, the determining the second antenna aperture configuration information includes:

determining second antenna aperture configuration information for each sensing object separately; or
determining second antenna aperture configuration information that applies to multiple sensing objects.

Optionally, the echo signal quality includes at least one of the following:

Echo signal power, echo signal noise ratio SNR, echo signal interference noise ratio (Signal Interference Noise Ratio, SINR), echo signal reference signal received power (Reference Signal Receiving Power, RSRP), and echo signal reference signal received quality (Reference Signal Received Quality, RSRQ).

The echo signal power includes at least one of the following options:

C31. The first signal is a sensing-dominant signal or an integrated sensing and communication signal, and the target echo signal power is total power of the target echo signal.

C32. The first signal is a communication-dominant signal, or a sensing-enhanced communication-dominant signal, such as a 5G NR signal or Wi-Fi signal, and the target echo signal power is power of the preamble (preamble), and/or synchronization signal, and/or reference signal in the target echo signal, where the reference signal can be DMRS, phase-tracking reference signals (Phase-tracking reference signals, PT-RS), CSI-RS, positioning reference signal (Positioning Reference Signal, P-RS), sounding reference signal (Sounding Reference Signal, SRS), or the like.

Specifically, a method of obtaining the echo signal power can be at least one of the following:

C41. Perform constant false alarm rate (Constant False Alarm Rate, CFAR) detection based on a one-dimensional delay map obtained through fast time dimension FFT processing of the echo signal, with the largest-amplitude sample value point that has crossed the CFAR threshold as the target sample value point, and its amplitude as the target signal amplitude, as shown in FIG. 4.

C42. Perform CFAR detection based on a one-dimensional Doppler map obtained through slow time dimension FFT processing of the echo signal, with the largest-amplitude sample value point that has crossed the CFAR threshold as the target sample value point, and its amplitude as the target signal amplitude, the same as shown in FIG. 4.

C43. Perform CFAR detection based on a two-dimensional delay-Doppler map obtained through 2D-FFT processing of the echo signal, with the largest-amplitude sample value point that has crossed the CFAR threshold as the target sample value point, and its amplitude as the target signal amplitude.

C44. Perform CFAR detection based on a three-dimensional delay-Doppler-angle map obtained through 3D-FFT processing of the echo signal, with the largest-amplitude sample value point that has crossed the CFAR threshold as the target sample value point, and its amplitude as the target signal amplitude.

It should be noted that in addition to the above determining the largest-amplitude sample value point that has crossed the CFAR threshold as the target sample value point, the method of determining the target signal amplitude can alternatively use an average value of the largest-amplitude sample value point that has crossed the CFAR threshold and its nearest several threshold-crossing sample value points as the target signal amplitude.

Specifically, the method of obtaining SNR/SINR can be:

C51. Perform CFAR detection based on a one-dimensional delay map obtained through fast time dimension FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ sample value points in the one-dimensional map as interference/noise sample value points, calculate their average interference/amplitude as an interference/noise signal amplitude, as shown in FIG. 4, and finally calculate SNR/SINR based on the target signal amplitude and the interference/noise signal amplitude.

C52. Perform CFAR detection based on a one-dimensional Doppler map obtained through slow time dimension FFT processing of the echo signal, with the largest-amplitude sample value point that has crossed the CFAR threshold as the target sample value point, and its amplitude as the target signal amplitude, and with all sample value points away from the target sample value point by more than $\pm\eta$ sample value points in the one-dimensional map as interference/noise sample value points, calculate their average amplitude as an interference/noise signal amplitude, and finally calculate SNR/SINR based on the target signal amplitude and the interference/noise signal amplitude.

C53. Perform CFAR detection based on a two-dimensional delay-Doppler map obtained through 2D-FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ (fast time dimension) and $\pm\eta$ (slow time dimension) sample value points in the two-dimensional map as interference/noise sample value points, calculate their average amplitude as an interference/noise signal amplitude, and finally calculate SNR/SINR based on the target signal amplitude and the interference/noise signal amplitude.

C54. Perform CFAR detection based on a three-dimensional delay-Doppler-angle map obtained through 3D-FFT processing of the echo signal, with the largest-amplitude sample value point that has crossed the CFAR threshold as the target sample value point, and its amplitude as the target signal amplitude, and with all sample value points away from the target sample value point by more than $\pm\varepsilon$ (fast time dimension), $\pm\eta$ (slow time dimension), and $\pm\delta$ (angle dimension) sample value points in the three-dimensional map as interference/noise sample value points, calculate their average amplitude as an interference/noise signal amplitude, and finally calculate SNR/SINR based on the target signal amplitude and the interference/noise signal amplitude.

It should be noted that in addition to the above determining the target signal amplitude with the largest-amplitude sample value point that has crossed the CFAR threshold as the target sample value point, the method of determining the target signal amplitude can alternatively use an average value of the largest-amplitude sample value point that has crossed the CFAR threshold and its nearest several threshold-crossing sample value points as the target signal amplitude.

It should be noted that the method of determining interference/noise sample value points can further include screening based on the above-determined interference/noise sample value points, where the screening method is: for the one-dimensional delay map, remove several sample value points near the delay of 0, with the remaining interference/noise sample value points as noise sample value points; for the one-dimensional Doppler map, remove several sample value points near the Doppler of 0, with the remaining interference/noise sample value points as interference/noise sample value points; for the two-dimensional delay-Doppler map, remove the interference/noise sample value points in a strip-shaped range created by several points near the delay of 0 and the entire Doppler range, with the remaining noise sample value points as interference/noise sample value points; for the three-dimensional delay-Doppler-angle map, remove the interference/noise sample value points in a slice-shaped range created by several points near the time dimension of 0, the entire Doppler range, and the entire angle range, with the remaining interference/noise sample value points as interference/noise sample value points.

It should also be noted that the predicted value of echo signal quality for the next moment is calculated according to the radar equation based on the predicted value $R'$ of the distance of the sensing object relative to the first device, where the calculation process assumes that the RCS is the same in the next moment as in the current moment, which is:

$$P_r' = \frac{(R')^4}{R^4} \cdot P_r$$

$$SNR' = \frac{(R')^4}{R^4} \cdot SNR$$

$$SINR' = \frac{(R')^4}{R^4} \cdot SINR$$

where $P_r$, $SNR$, and $SINR$ respectively represent the current moment's echo signal power, echo signal noise ratio, and echo signal interference noise ratio, $P_r'$, $SNR'$, and $SINR'$ respectively represent the next moment's predicted values of the echo signal power, echo signal noise ratio, and echo signal interference noise ratio, and $R$ and $R'$ respectively represent the current moment's distance of the sensing object relative to the first device and the predicted value of the next moment's distance of the sensing object relative to the first device.

Additionally, it should be noted that the end of the sensing process in the embodiment of this application can be determined in at least one of the following ways:

A41. End of sensing timing.

That is, when the length of sensing time reaches the sensing duration requirement in the sensing request, the sensing process ends.

A42. Satisfaction of sensing indicators.

That is, when requirements for specific sensing indicators in the sensing request are met, the sensing process ends; for example, in the radar imaging scenario, the radar imaging operation for the imaging range in the sensing request is completed based on the imaging resolution requirement in the sensing request.

A43. Beam failure.

That is, if the sensing object is blocked or the target moves out of the sensing range in the sensing request, and the echo signal power or echo signal SNR cannot meet the related requirement in the sensing request, the sensing process ends.

A44. Loss of sensing object.

That is, if the radar cannot establish stable tracking of the sensing object due to reasons such as motion characteristics (frequent acceleration and deceleration, or frequent turning) of the sensing object, and the radar loses tracking of the sensing object, the sensing process ends.

It should also be noted that the sensing function network element mentioned in this application refers to a network node in the core network and/or radio access network that is responsible for at least one of the functions of sensing request processing, sensing resource scheduling, sensing information exchange, sensing data processing, and the like. It can be an upgrade based on the existing 5G network access management function (AMF) or location management function (Location Management Function, LMF), or other existing or newly defined network nodes.

The following gives detailed explanations of the embodiments of this application in conjunction with specific applications.

Application scenario one: antenna aperture adaptation based on monostatic radar mode

First, it should be noted that monostatic radar refers to the integration of the signal transmitter and receiver, sharing an antenna. Its advantage is that the target echo signal and the receiver's local oscillator are naturally coherent, and signal processing is relatively convenient. Its disadvantage is that signal transmission and reception cannot be performed simultaneously, and signals with a certain duty cycle must be used, resulting in a detection blind zone, and complex algorithms must be used to compensate; or signal transmission and reception are performed simultaneously, with strict isolation between transmission and reception, but for high-power military radars, this is difficult to achieve.

Taking base station A as an example, which performs transmission and reception of sensing signals both by itself, the main implementation process in this scenario includes:

Step S11. At an initial moment of sensing, base station A or a sensing function network element sets a sensing signal configuration parameter based on a sensing target parameter (also known as a sensing object parameter), sensing indicator requirement, and sensing prior information in a sensing request, combined with capability information of base station A.

The capability information of base station A includes: hardware configuration, software configuration, and current software and hardware resource occupancy and the type and priority level of services currently occupying the software and hardware resources of the base station and terminal.

The sensing target parameter includes at least one of the following:

distance/time delay;
speed/Doppler; and
angle.

The sensing indicator includes at least one of the following:

resolution of distance/angle/speed measurement;
accuracy of distance/angle/speed measurement;
range of distance/angle/speed measurement;
sensing target RCS requirement;
sensing target maneuverability (acceleration);
sensing data rate (update rate of the sensing target parameter per unit time, in Hz); and
detection probability/false alarm probability.

The sensing prior information provides base station A with prior information about the spatial range and/or motion characteristics of the sensing target or area, including at least one of the following:

spatial range prior information: location range and/or angle range or the like of the target or area to be sensed; and

motion characteristic prior information: speed range and/or acceleration range or the like of the target to be sensed.

The sensing signal configuration parameter includes at least one of the following combinations:

signal frequency and operating bandwidth, and if the first signal is an orthogonal frequency division multiplexing (Orthogonal Frequency Division Multiplexing, OFDM) signal, also OFDM signal subcarrier spacing, sensing signal gap in the number of resource elements (Resource Elements, RE) in frequency domain, and sensing signal gap in the number of OFDM symbols in time domain;
transmit/receive beam width, beam direction, and beam sweeping range;
duration of a sensing frame (that is, duration of a sensing burst);
duty cycle and pulse period of a pulse signal; and
transmit power.

The process of setting the sensing signal configuration parameter based on the sensing indicator requirement includes at least one of the following:

setting the operating bandwidth based on a distance resolution requirement;
setting the transmit beam width and receive beam width based on an angle resolution requirement;
setting the duration of a sensing burst based on a speed resolution requirement;
setting the sensing signal gap in the number of OFDM symbols in time domain for an OFDM signal or the duty cycle and pulse period of a pulse signal, based on a distance range requirement;
setting the transmit power and transmit/receive beam gain based on a distance range requirement, target RCS, and a distance/angle/speed accuracy requirement;
setting the beam sweeping range based on an angle range requirement; and
setting the subcarrier spacing and the gap in the number of REs in frequency domain for an OFDM signal or the pulse period of a pulse signal, based on a speed range requirement.

It should be noted that this application mainly involves the link adaptation of the antenna aperture, so only parameters related to the antenna aperture link adaptation are listed among the sensing signal configuration parameters.
Step S12. Base station A or the sensing function network element sets an angle resolution corresponding to antenna aperture based on an angle resolution requirement in the sensing request and antenna array hardware configuration of base station A, and/or, a lateral resolution requirement for radar imaging and an operational distance requirement for radar imaging, and obtains antenna aperture configuration information.
Step S13. Base station A generates and transmits a first signal based on the sensing signal configuration parameter and receives an echo signal of the first signal. If the sensing signal configuration parameter and the antenna aperture configuration information are set by the sensing function network element, there is also a process for base station A to receive the sensing signal configuration parameter and the antenna aperture configuration information before generating the first signal.
It should be noted that the first signal can be one of the following:

a communication-dominant signal: such as NR signal, LTE signal, or Wi-Fi signal;
a sensing-dominant signal: such as a radar signal, including FMCW radar signal, OFDM radar signal (including phase-coded OFDM radar signal), LFM signal, simple pulse train signal, phase-coded radar signal, and the like;
a sensing-enhanced communication-dominant signal: for example, an NR signal redesigned for sensing functionality with reference signal time-frequency domain density; and
an integrated sensing and communication signal: refers to a signal waveform newly designed for integrated sensing and communication scenarios, which may include signal waveforms based on NR signal for reference signal applicability design, multi-symbol OFDM pulse signal waveforms, and the like.

The waveform of the first signal can be a continuous waveform or a pulse waveform.
Step S14. After receiving the echo signal, base station A can obtain measurement quantities based on the echo signal.
Specifically, the method of obtaining measurement quantities can be learned from the descriptions above, which will not be repeated herein.
Step S15, If detecting a sensing object during radar signal processing, base station A or the sensing function network element enters link adaptation in tracking mode to obtain antenna aperture configuration information for the next moment. This can be implemented in one of the following ways:

performing link adaptive adjustment on the antenna aperture for the next moment based on the current moment's distance and angle of the sensing object relative to base station A; and

performing link adaptive adjustment on the antenna aperture for the next moment based on predicted values of the distance and angle of the sensing object relative to base station A for the next moment.

It should also be noted that if radar is tracking multiple sensing objects at the same time, base station A or the sensing function network element performs the above antenna aperture link adaptation process for each sensing object and obtains the antenna aperture configuration information for the next moment corresponding to each sensing object separately; or, base station A or the sensing function network element synthesizes the parameters of each sensing object to obtain comprehensive antenna aperture configuration information for the next moment that applies to multiple sensing objects.

Step S 16. Base station A sets transmit and receive beams of the first signal based on the antenna aperture configuration information for the next moment and performs a sensing process for the next moment, repeating steps S13 to S 16 until the sensing process ends.

Application scenario two: antenna aperture adaptation based on bistatic radar mode

First, it should be noted that bistatic radar refers to a situation where the signal transmitter and receiver are located at different positions. Its advantage is that signal transmission and reception can be performed simultaneously, and continuous waveforms can be used for detection. Its disadvantage is that it is difficult for the receiver and transmitter to achieve co-channel operation and coherence, making signal processing relatively complex.

Taking a base station as the transmitting device (that is, the base station transmits the sensing signal) and a terminal as the receiving device (that is, the terminal receives the sensing signal) as an example, the main implementation process in this scenario includes:

Step S21. At an initial moment of sensing, set a sensing signal configuration parameter based on a sensing target parameter, a sensing indicator requirement, and sensing prior information in a sensing request, combined with capability information of a base station and a terminal. This includes the following options:

a sensing function network element sets the sensing signal configuration parameter based on the sensing target parameter, sensing indicator requirement, and sensing prior information in the sensing request, combined with the obtained capability information of the base station and terminal, and sends the sensing signal configuration parameter to the base station and terminal;

the base station and terminal set respective parts of the sensing signal configuration parameter related to themselves based on the sensing target parameter, sensing indicator requirement, and sensing prior information in the sensing request, combined with their own capability information; and

either the base station or terminal sets the sensing signal configuration parameter based on the sensing target parameter, sensing indicator requirement, and sensing prior information in the sensing request, combined with their own capability information and the obtained capability information of the other device, and sends the sensing signal configuration parameter to the other device.

The connection relationship between the sensing function network element, base station, and terminal and the corresponding information exchange method include the following three situations:

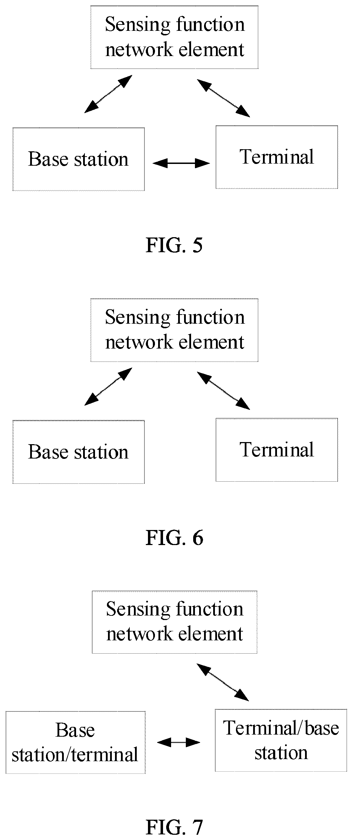

any two of the sensing function network element, base station, and terminal have a direct communication connection, as shown in FIG. 5, where any two can directly exchange information;

the sensing function network element has a direct communication connection with both the base station and terminal, but there is no direct communication connection between the base station and terminal, as shown in FIG. 6; in this case, the sensing function network element can directly exchange information with the base station or terminal, and the information exchange between the base station and terminal needs to be forwarded by the sensing function network element; and

the sensing function network element has a direct communication connection with only one of the base station and terminal, and there is a direct communication connection between the base station and terminal, as shown in FIG. 7; in this case, the device with a direct communication connection with the sensing function network element can directly exchange information with the sensing function network element, and the device without a direct communication connection with the sensing function network element needs forwarding by the device with a direct communication connection with the sensing function network element for communication with the sensing function network element.

It should be noted that before the base station or terminal sets the sensing signal configuration including the related part of the other device, the base station or terminal needs to exchange information with the other device to obtain the capability configuration information of the other device.

The sensing function network element obtains the capability information of the base station and terminal in the following two ways:

the sensing function network element or another network node that the sensing function network element can access stores the capability information of the base station and terminal in advance; and

the sensing function network element exchanges information with the base station and terminal, and the base station and terminal report their capability information to the sensing function network element.

The capability information of the base station and terminal includes: hardware configuration, software configuration, and current software and hardware resource occupancy of the base station and terminal, as well as the type and priority level of services currently occupying the software and hardware resources of the base station and terminal.

The sensing target parameter, sensing indicator, sensing prior information, sensing-related configuration parameter, and the process of setting a sensing signal configuration parameter based on a sensing indicator requirement can be learned from application scenario one, which will not be repeated herein.

Step S22. Set an angle resolution corresponding to antenna aperture based on an angle resolution requirement in the sensing request, antenna array hardware configuration of base station A, and/or, a lateral resolution requirement for radar imaging and an operational distance requirement for radar imaging, and obtain antenna aperture configuration information.

This application considers the bistatic radar scenario where the angle resolution is determined by the receiving end's antenna aperture. The method of determining the receiving end's antenna aperture can be:

the base station sets a recommendation value for the initial receiving end antenna aperture based on the angle resolution requirement in the sensing request, and/or, the lateral resolution requirement for radar imaging and the operational distance requirement for radar imaging, and sends the recommendation value to the terminal; the terminal sets the initial receiving end antenna aperture based on the received initial antenna aperture recommendation value, combined with its own antenna array hardware configuration;

the terminal sets the initial receiving end antenna aperture based on the angle resolution requirement in the sensing request, and/or, the lateral resolution requirement for radar imaging and the operational distance requirement for radar imaging, combined with its own antenna array hardware configuration; or

the sensing function network element sets the initial receiving end antenna aperture based on the angle resolution requirement in the sensing request, and/or, the lateral resolution requirement for radar imaging and the operational distance requirement for radar imaging, combined with the antenna array hardware configuration of the scheduled terminal, and sends the initial receiving end antenna aperture to the terminal.

It should be noted that if the sensing function network element performs the above setting of the receiving end antenna aperture, then the sensing function network element or another network node that the sensing function network element can access should store the antenna array hardware configuration of the sensing node scheduled by the sensing function network element; or, after the sensing function network element selects the sensing node to execute the sensing process and sends the sensing request information to the sensing node, the sensing node feeds back its antenna array hardware configuration to the sensing function network element.

Step S23. The base station generates and transmits a first signal based on the sensing signal configuration parameter, and the terminal sets the receive waveform and receives an echo signal of the first signal based on the sensing signal configuration parameter and antenna aperture configuration information.

The specifics of the first signal can be learned from application scenario one, which will not be repeated herein.

Step S24. After receiving the echo signal, the terminal can obtain measurement quantities based on the echo signal.

Specifically, the method of obtaining measurement quantities can be learned from the descriptions above, which will not be repeated herein.

Step S25. If detecting a sensing object during the radar signal processing, the terminal or sensing function network element enters link adaptation in tracking mode to obtain antenna aperture configuration information for the next moment. This can be implemented in one of the following ways:

performing link adaptive adjustment on the antenna aperture for the next moment based on the current moment's distance and angle of the sensing object relative to the terminal; and

performing link adaptive adjustment on the antenna aperture for the next moment based on predicted values of the distance and angle of the sensing object relative to the terminal for the next moment.

It should also be noted that if radar is tracking multiple sensing objects at the same time, the terminal or sensing function network element performs the above antenna aperture link adaptation process for each sensing object and obtains the antenna aperture configuration information for the next moment corresponding to each sensing object separately; or, the terminal or sensing function network element synthesizes the parameters of each sensing object to obtain comprehensive antenna aperture configuration information for the next moment that applies to multiple sensing objects.

Step S26. The terminal sets the receive beam based on the antenna aperture configuration information for the next moment, and the terminal and base station perform a sensing process for the next moment, repeating steps S23 to S26 until the sensing process ends.

It should be noted that transmit and receive devices in the specific application cases mentioned in the embodiments of this application are just examples and do not exclude cases where the transmitting and receiving devices are other devices.

It should be noted that this application provides a method for link adaptive adjustment of antenna aperture in radar detection in integrated sensing and communication scenarios. In search mode, the initial antenna aperture is set based on the sensing request and antenna array hardware configuration, and the principles for enabling sparse array are given; in tracking mode, the antenna aperture for the next moment is adaptively adjusted based on the distance and angle segment, and the principles for enabling sparse array are given, to meet the sensing request while optimizing the use of antenna resources.

The sensing method provided by the embodiments of this application can be executed by a sensing apparatus. In the embodiments of this application, a sensing apparatus executing the sensing method is used as an example to describe the sensing apparatus provided by the embodiments of this application.

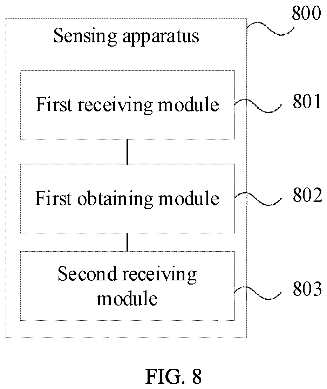

As shown in FIG. 8, an embodiment of this application provides a sensing apparatus 800 applied to a first device, including:

a first receiving module 801, configured to receive a first echo signal of a first signal at a first moment based on first antenna aperture configuration information, where the first echo signal is sent by a second device;

a first obtaining module 802, configured to obtain second antenna aperture configuration information based on a second echo signal at a second moment, in a case of determining based on the first echo signal that a sensing object is found; and

a second receiving module 803, configured to receive a third echo signal of the first signal at a third moment based on the second antenna aperture configuration information, where the third echo signal is sent by the second device.

Here, the second moment is the same as the first moment or after the first moment; and the third moment is a moment after the second moment.

Optionally, the first antenna aperture configuration information and the second antenna aperture configuration information include: an aperture setting method and an aperture offset value for a target direction.

The target direction includes at least one of the following: azimuth and pitch.

Optionally, the method of obtaining the first antenna aperture configuration information includes at least one of the following:

determining the first antenna aperture configuration information based on first information and antenna array hardware configuration information of the first device, where the first information includes at least one of the following: an angle resolution requirement in a sensing request, a lateral resolution requirement for radar imaging, and an operational distance requirement for radar imaging;

determining the first antenna aperture configuration information based on an antenna aperture recommendation value sent by the second device and the antenna array hardware configuration information of the first device; and

receiving the first antenna aperture configuration information sent by a sensing function network element.

Optionally, the determining the first antenna aperture configuration information based on first information and antenna array hardware configuration information of the first device includes:

determining a first angle resolution based on the first information;

determining a first aperture setting method in an angle resolution to aperture setting method correspondence table corresponding to the antenna array hardware configuration information of the first device based on the first angle resolution; and

determining an aperture offset value corresponding to the first aperture setting method based on the first aperture setting method and an occupancy situation of antenna array elements.

Optionally, the first angle resolution satisfies at least one of the following:

value of the first angle resolution is less than or equal to the angle resolution requirement in the sensing request; and value of the first angle resolution is less than or equal to a ratio of the lateral resolution requirement for radar imaging to the operational distance requirement for radar imaging.

Optionally, a method of determining the first aperture setting method in the angle resolution to aperture setting method correspondence table corresponding to the antenna array hardware configuration information of the first device based on the first angle resolution includes:

determining a first aperture setting method corresponding to the first angle resolution in the angle resolution to aperture setting method correspondence table corresponding to the antenna array hardware configuration information of the first device based on a first selection criterion.

Here, the first selection criterion includes at least one of the following:

in a case that there is no angle prior information of the sensing object in the sensing request or accuracy of the angle prior information of the sensing object is greater than a first preset value, use of sparse array antennas is disabled;

in a case that the accuracy of the angle prior information of the sensing object is less than or equal to the first preset value, and the antenna array hardware configuration information of the first device meets a first condition, use priority of dense array antennas is set to be higher than that of sparse array antennas; and

in a case that the accuracy of the angle prior information of the sensing object is less than or equal to the first preset value, and the antenna array hardware configuration information of the first device does not meet the first condition, use of sparse array antennas is enabled.

Here, the first condition is that an antenna aperture created by continuously arranged available antenna array elements is greater than or equal to an antenna aperture in the aperture setting method.

Optionally, the first obtaining module 802 includes:

a first executing unit configured to execute a first operation; and
a first receiving unit configured to receive the first antenna aperture configuration information sent by a sensing function network element.

The first operation includes at least one of the following:

performing radar signal processing on the second echo signal received at the second moment to determine measurement quantities and sending the measurement quantities to the sensing function network element;
sending the second echo signal received at the second moment to the sensing function network element; and
performing part of calculations in radar signal processing on the second echo signal received at the second moment to obtain a first part of measurement quantities and sending the first part to the sensing function network element, where the first part is a part that belongs to a first level among parts of different levels contained in the measurement quantities.

Optionally, the first obtaining module 802 includes:

a first determining unit, configured to perform radar signal processing on the second echo signal received at the second moment to determine measurement quantities; and
a second determining unit, configured to determine the second antenna aperture configuration information based on the measurement quantities.

Optionally, the second determining unit is configured to:

determine the second antenna aperture configuration information based on distance and angle of the sensing object relative to the first device obtained from the measurement quantities; or
predict the distance and angle of the sensing object relative to the first device, and determine the second antenna aperture configuration information based on predicted values of the distance and angle of the sensing object relative to the first device.

Optionally, the determining the second antenna aperture configuration information based on distance and angle of the sensing object relative to the first device obtained from the measurement quantities includes:

determining a distance and angle segment corresponding to the distance and angle of the sensing object relative to the first device obtained from the measurement quantities; and

determining the second antenna aperture configuration information in a distance and angle segment to aperture setting correspondence table based on a second selection criterion and the distance and angle segment.

Here, the second selection criterion includes at least one of the following:

in a case that echo signal quality corresponding to the second echo signal is greater than or equal to a second preset value, and the antenna array hardware configuration information of the first device meets the first condition, use priority of dense array antennas is set to be higher than that of sparse array antennas;

in a case that the echo signal quality corresponding to the second echo signal is greater than or equal to the second preset value, and the antenna array hardware configuration information of the first device does not meet the first condition, use of sparse array antennas is enabled; and

in a case that the echo signal quality corresponding to the second echo signal is less than the second preset value, use of sparse array antennas is disabled.

Here, the first condition is that an antenna aperture created by continuously arranged available antenna array elements is greater than or equal to an antenna aperture in the aperture setting method.

Optionally, the determining the second antenna aperture configuration information based on predicted values of the distance and angle of the sensing object relative to the first device includes:

determining a distance and angle segment corresponding to the predicted values of the distance and angle of the sensing object relative to the first device; and

determining the second antenna aperture configuration information in a distance and angle segment to aperture setting correspondence table based on a third selection criterion and the distance and angle segment.

Here, the third selection criterion includes at least one of the following:

in a case that a predicted value of echo signal quality is greater than or equal to a third preset value, and the antenna array hardware configuration information of the first device meets the first condition, use priority of dense array antennas is set to be higher than that of sparse array antennas;

in a case that the predicted value of echo signal quality is greater than or equal to the third preset value, and the antenna array hardware configuration information of the first device does not meet the first condition, use of sparse array antennas is enabled; and

in a case that the predicted value of echo signal quality is less than the third preset value, use of sparse array antennas is disabled.

Here, the first condition is that an antenna aperture created by continuously arranged available antenna array elements is greater than or equal to an antenna aperture in the aperture setting method.

Optionally, the echo signal quality includes at least one of the following:
echo signal power, echo signal noise ratio SNR, echo signal interference noise ratio SINR, echo signal reference signal received power RSRP, and echo signal reference signal received quality RSRQ.

Optionally, in a case of multiple sensing objects, the determining the second antenna aperture configuration information includes:

determining second antenna aperture configuration information for each sensing object separately; or

determining second antenna aperture configuration information that applies to multiple sensing objects.

Optionally, the antenna array hardware configuration information includes:
numbers of array elements in azimuth and pitch of the antenna array, spacing between array elements, and indexes of available antenna array elements.

Optionally, in a case that the antenna aperture configuration information is sent by a sensing function network element, the sensing function network element indicates the antenna aperture configuration information in at least one of the following ways:

jointly encoding the aperture setting method and aperture offset value; and

identifying the aperture setting method and aperture offset value with different bits.

Optionally, the aperture setting method includes at least one of the following:

antenna aperture;
antenna array arrangement method, where the antenna array arrangement method includes: dense array antenna or sparse array antenna; and
spacing between array elements.

In the embodiments of this application, in the case that a sensing object is found, the echo signals received from the previous moment or multiple previous moments can be used to obtain the antenna aperture configuration information for the next moment, so that the antenna aperture configuration information can be adjusted adaptively, which can optimize system performance and improve the utilization of antenna resources.

The sending apparatus in the embodiments of this application can be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The sensing apparatus provided in the embodiments of this application can implement the processes implemented in the method embodiment in FIG. 2, with the same technical effect achieved. To avoid repetition, details are not described herein again.

An embodiment of this application further provides a communication device. The communication device is a first device including a processor and a communication interface. The communication interface is configured to receive a first echo signal of a first signal at a first moment based on first antenna aperture configuration information, where the first echo signal is sent by a second device. The processor is configured to obtain second antenna aperture configuration information based on a second echo signal at a second moment, in a case of determining based on the first echo signal that a sensing object is found; and the communication interface is configured to receive a third echo signal of the first signal at a third moment based on the second antenna aperture configuration information, where the third echo signal is sent by the second device.

Here, the second moment is the same as the first moment or after the first moment; and the third moment is a moment after the second moment.

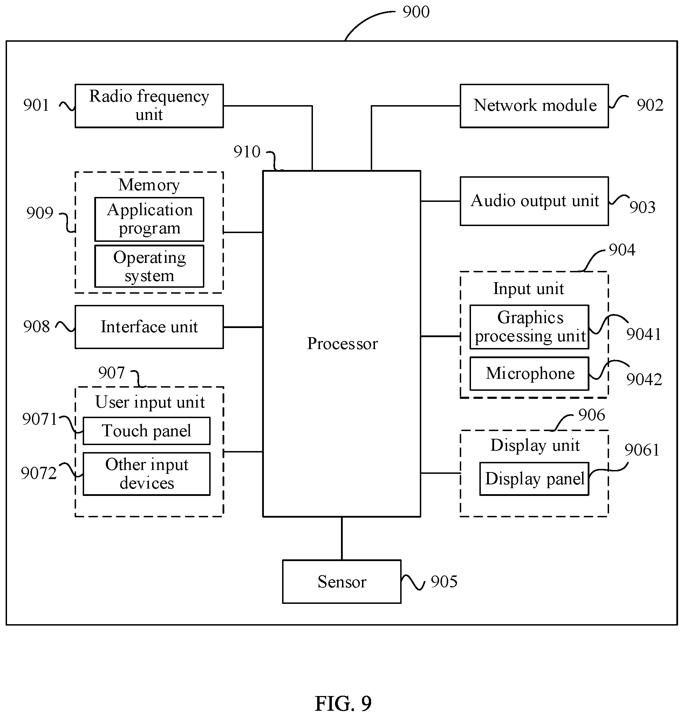

This communication device embodiment corresponds to the foregoing first device side method embodiment. All processes and implementations in the foregoing method embodiment can be applicable to this communication device embodiment, with the same technical effect achieved. Specifically, FIG. 9 is a schematic diagram of a hardware structure of a first device implementing the embodiments of this application.

The first device 900 includes but is not limited to at least part of these components: a radio frequency unit 901, a network module 902, an audio output unit 903, an input unit 904, a sensor 905, a display unit 906, a user input unit 907, an interface unit 908, a memory 909, a processor 910, and the like.

It can be understood by those skilled in the art that the terminal 900 may further include a power supply (for example, battery) supplying power to the components. The power supply may be logically connected to the processor 910 via a power management system, so that functions such as charge management, discharge management, and power consumption management are implemented via the power management system. The structure of the first device shown in FIG. 9 does not constitute any limitation on the terminal, and the terminal may include more or fewer components than shown in the figure, or combine some of the components, or have different arrangements of the components. Details are not described herein.

It should be understood that the input unit 904 may include a graphics processing unit (Graphics Processing Unit, GPU) 9041 and a microphone 9042. The graphics processing unit 9041 processes image data of still pictures or videos that are obtained by an image capture apparatus (for example, camera) in an image or video capture mode. The display unit 906 may include a display panel 9061. The display panel 9061 may be configured in a form of a liquid crystal display, an organic light-emitting diode display, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. Specifically, the other input devices 9072 may include but are not limited to a physical keyboard, a function button (for example, volume control button or on/off button), a trackball, a mouse, and a joystick. Details are not described herein.

In an embodiment of this application, the radio frequency unit 901 receives downlink data from a network-side device and transfers the data to the processor 910 for processing; and the radio frequency unit 901 can additionally send uplink data to the network-side device. Generally, the radio frequency unit 901 includes but is not limited to an antenna, an amplifier, a transceiver, a coupler, a low noise amplifier, a duplexer, and the like.

The memory 909 may be configured to store software programs or instructions and various data. The memory 909 may include a first storage are for storing programs or instructions and a second storage area for storing data. The first storage area may store an operating system, an application program or instructions required by at least one function (for example, a sound playback function or an image playback function), and the like. Additionally, the memory 909 may be a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 of the embodiments of this application includes but is not be limited to these and any other applicable types of memories.

The processor 910 may include one or more processing units. Optionally, the processor 910 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 910.

The radio frequency unit 901 is configured to receive a first echo signal of a first signal at a first moment based on first antenna aperture configuration information, where the first echo signal is sent by a second device.

The processor 910 is configured to obtain second antenna aperture configuration information based on a second echo signal at a second moment, in a case of determining based on the first echo signal that a sensing object is found.

The radio frequency unit 901 is configured to receive a third echo signal of the first signal at a third moment based on the second antenna aperture configuration information, where the third echo signal is sent by the second device.

Here, the second moment is the same as the first moment or after the first moment; and the third moment is a moment after the second moment.

In the embodiments of this application, in the case that a sensing object is found, the echo signals received from the previous moment or multiple previous moments can be used to obtain the antenna aperture configuration information for the next moment, so that the antenna aperture configuration information can be adjusted adaptively, which can optimize system performance and improve the utilization of antenna resources.

Optionally, the first antenna aperture configuration information and the second antenna aperture configuration information include: an aperture setting method and an aperture offset value for a target direction.

The target direction includes at least one of the following: azimuth and pitch.

Optionally, the processor 910 is configured to implement at least one of the following:

determining the first antenna aperture configuration information based on first information and antenna array hardware configuration information of the first device, where the first information includes at least one of the following: an angle resolution requirement in a sensing request, a lateral resolution requirement for radar imaging, and an operational distance requirement for radar imaging; and

determining the first antenna aperture configuration information based on an antenna aperture recommendation value sent by the second device and the antenna array hardware configuration information of the first device.

Alternatively, the radio frequency unit 901 is configured to:
receive the first antenna aperture configuration information sent by a sensing function network element.

Optionally, the processor 910 is configured to

determine a first angle resolution based on the first information;

determine a first aperture setting method in an angle resolution to aperture setting method correspondence table corresponding to the antenna array hardware configuration information of the first device based on the first angle resolution; and

determine an aperture offset value corresponding to the first aperture setting method based on the first aperture setting method and an occupancy situation of antenna array elements.

Optionally, the first angle resolution satisfies at least one of the following:

value of the first angle resolution is less than or equal to the angle resolution requirement in the sensing request; and

value of the first angle resolution is less than or equal to a ratio of the lateral resolution requirement for radar imaging to the operational distance requirement for radar imaging.

Optionally, the processor 910 is configured to

determine a first aperture setting method corresponding to the first angle resolution in the angle resolution to aperture setting method correspondence table corresponding to the antenna array hardware configuration information of the first device based on a first selection criterion.

Here, the first selection criterion includes at least one of the following:

in a case that there is no angle prior information of the sensing object in the sensing request or accuracy of the angle prior information of the sensing object is greater than a first preset value, use of sparse array antennas is disabled;

in a case that the accuracy of the angle prior information of the sensing object is less than or equal to the first preset value, and the antenna array hardware configuration information of the first device meets a first condition, use priority of dense array antennas is set to be higher than that of sparse array antennas; and

in a case that the accuracy of the angle prior information of the sensing object is less than or equal to the first preset value, and the antenna array hardware configuration information of the first device does not meet the first condition, use of sparse array antennas is enabled.

Here, the first condition is that an antenna aperture created by continuously arranged available antenna array elements is greater than or equal to an antenna aperture in the aperture setting method.

Optionally, the processor 910 is configured to

executing a first operation.

The radio frequency unit 901 is configured to receive the first antenna aperture configuration information sent by a sensing function network element.

The first operation includes at least one of the following:

performing radar signal processing on the second echo signal received at the second moment to determine measurement quantities and sending the measurement quantities to the sensing function network element;

sending the second echo signal received at the second moment to the sensing function network element; and

performing part of calculations in radar signal processing on the second echo signal received at the second moment to obtain a first part of measurement quantities and sending the first part to the sensing function network element, where the first part is a part that belongs to a first level among parts of different levels contained in the measurement quantities.

Optionally, the processor 910 is configured to

perform radar signal processing on the second echo signal received at the second moment to determine measurement quantities; and

determine the second antenna aperture configuration information based on the measurement quantities.

Optionally, the processor 910 is configured to

determine the second antenna aperture configuration information based on distance and angle of the sensing object relative to the first device obtained from the measurement quantities; or

predict distance and angle of the sensing object relative to the first device and determine the second antenna aperture configuration information based on predicted values of the distance and angle of the sensing object relative to the first device.

Optionally, the processor 910 is configured to

determine a distance and angle segment corresponding to the distance and angle of the sensing object relative to the first device obtained from the measurement quantities; and

determine the second antenna aperture configuration information in a distance and angle segment to aperture setting correspondence table based on a second selection criterion and the distance and angle segment.

Here, the second selection criterion includes at least one of the following:

in a case that echo signal quality corresponding to the second echo signal is greater than or equal to a second preset value, and the antenna array hardware configuration information of the first device meets the first condition, use priority of dense array antennas is set to be higher than that of sparse array antennas;

in a case that the echo signal quality corresponding to the second echo signal is greater than or equal to the second preset value, and the antenna array hardware configuration information of the first device does not meet the first condition, use of sparse array antennas is enabled; and

in a case that the echo signal quality corresponding to the second echo signal is less than the second preset value, use of sparse array antennas is disabled.

Here, the first condition is that an antenna aperture created by continuously arranged available antenna array elements is greater than or equal to an antenna aperture in the aperture setting method.

Optionally, the processor 910 is configured to

determine a distance and angle segment corresponding to the predicted values of the distance and angle of the sensing object relative to the first device; and

determine the second antenna aperture configuration information in a distance and angle segment to aperture setting correspondence table based on a third selection criterion and the distance and angle segment.

Here, the third selection criterion includes at least one of the following:

in a case that a predicted value of echo signal quality is greater than or equal to a third preset value, and the antenna array hardware configuration information of the first device meets the first condition, use priority of dense array antennas is set to be higher than that of sparse array antennas;

in a case that the predicted value of echo signal quality is greater than or equal to the third preset value, and the antenna array hardware configuration information of the first device does not meet the first condition, use of sparse array antennas is enabled; and

in a case that the predicted value of echo signal quality is less than the third preset value, use of sparse array antennas is disabled.

Here, the first condition is that an antenna aperture created by continuously arranged available antenna array elements is greater than or equal to an antenna aperture in the aperture setting method.

Optionally, the echo signal quality includes at least one of the following:

echo signal power, echo signal noise ratio SNR, echo signal interference noise ratio SINR, echo signal reference signal received power RSRP, and echo signal reference signal received quality RSRQ.

Optionally, in a case of multiple sensing objects, the processor 910 is configured to:

determine second antenna aperture configuration information for each sensing object separately; or

determine antenna aperture configuration information for the second moment that applies to multiple sensing objects.

Optionally, the antenna array hardware configuration information includes:

numbers of array elements in azimuth and pitch of the antenna array, spacing between array elements, and indexes of available antenna array elements.

Optionally, in a case that the antenna aperture configuration information is sent by a sensing function network element, the sensing function network element indicates the antenna aperture configuration information in at least one of the following ways:

jointly encoding the aperture setting method and aperture offset value; and

identifying the aperture setting method and aperture offset value with different bits.

Optionally, the aperture setting method includes at least one of the following:

antenna aperture;

antenna array arrangement method, where the antenna array arrangement method includes: dense array antenna or sparse array antenna; and

spacing between array elements.

In the embodiments of this application, in the case that a sensing object is found, the echo signals received from the previous moment or multiple previous moments can be used to obtain the antenna aperture configuration information for the next moment, so that the antenna aperture configuration information can be adjusted adaptively, which can optimize system performance and improve the utilization of antenna resources.

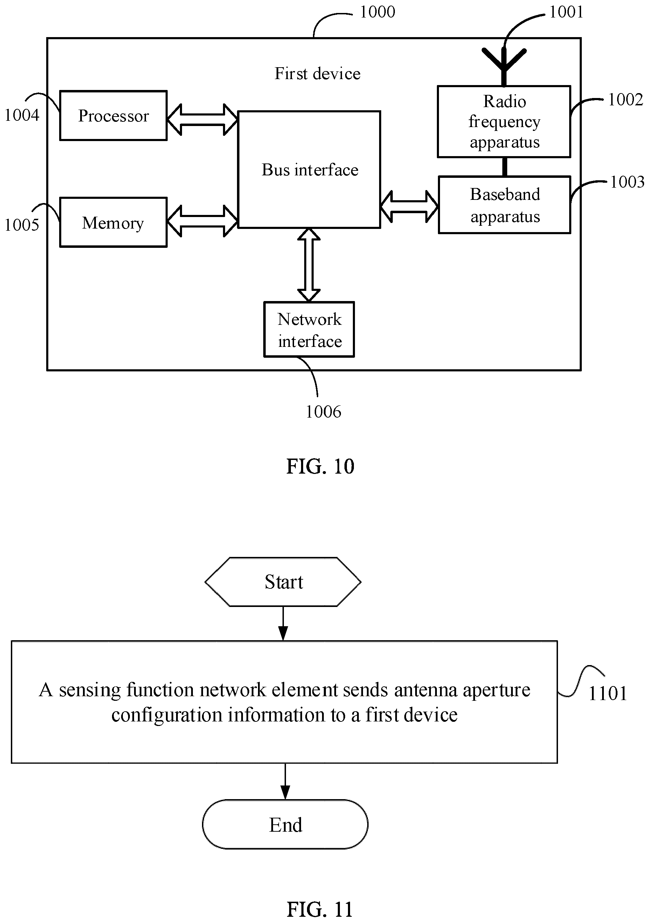

Specifically, FIG. 10 is a schematic diagram of a hardware structure of another first device implementing the embodiments of this application.

As shown in FIG. 10, the first device 1000 includes an antenna 1001, a radio frequency apparatus 1002, a baseband apparatus 1003, a processor 1004, and memory 1005. The antenna 1001 is connected to the radio frequency apparatus 1002. Uplink, the radio frequency apparatus 1002 receives information through the antenna 1001, and sends the received information to the baseband apparatus 1003 for processing. Downlink, the baseband apparatus 1003 processes to-be-sent information, and sends the information to the radio frequency apparatus 1002; and the radio frequency apparatus 1002 processes the received information and then sends the information out through the antenna 1001.

The method executed by the network-side device in the aforesaid embodiments may be implemented on the baseband apparatus 1003. The baseband apparatus 1003 includes a baseband processor.

The baseband apparatus 1003 may include, for example, at least one baseband processing unit, where multiple chips are disposed on the baseband processing unit. As shown in FIG. 10, one of the chips is, for example, a baseband processor, connected to the memory 1005 through the bus interface, to invoke a program in the memory 1005 to perform the operation of the network-side device shown in the foregoing method embodiment.

The network-side device further includes a network interface 1006, where the interface is, for example, a common public radio interface (Common Public Radio Interface, CPRI).

Specifically, the first device 10000 in the embodiments of this application further includes: instructions or a program stored in the memory 1005 and runnable on the processor 1004. The processor 1004 invokes the instructions or program in the memory 1005 to execute the method executed by the modules shown in FIG. 8, with the same technical effects achieved. To avoid repetition, details are not described herein again.

As shown in FIG. 11, an embodiment of this application provides a sensing configuration method, including the following steps.

Step 1101. A sensing function network element sends antenna aperture configuration information to a first device.

The antenna aperture configuration information includes at least one of the following: first antenna aperture configuration information and second antenna aperture configuration information.

Optionally, the antenna aperture configuration information includes: an aperture setting method and an aperture offset value for a target direction.

The target direction includes at least one of the following: azimuth and pitch.

Optionally, a method for the sensing function network element to obtain the first antenna aperture configuration information includes:

the sensing function network element determines the first antenna aperture configuration information based on first information and antenna array hardware configuration information of the first device.

The first information includes at least one of the following:

an angle resolution requirement in a sensing request, a lateral resolution requirement for radar imaging, and an operational distance requirement for radar imaging.

Optionally, the determining the first antenna aperture configuration information based on first information and antenna array hardware configuration information of the first device includes:

determining a first angle resolution based on the first information;
determining a first aperture setting method in an angle resolution to aperture setting method correspondence table corresponding to the antenna array hardware configuration information of the first device based on the first angle resolution; and
determining an aperture offset value corresponding to the first aperture setting method based on the first aperture setting method and an occupancy situation of antenna array elements.

Optionally, the first angle resolution satisfies at least one of the following:

value of the first angle resolution is less than or equal to the angle resolution requirement in the sensing request; and
value of the first angle resolution is less than or equal to a ratio of the lateral resolution requirement for radar imaging to the operational distance requirement for radar imaging.

Optionally, a method of determining the first aperture setting method in the angle resolution to aperture setting method correspondence table corresponding to the antenna array hardware configuration information of the first device based on the first angle resolution includes:

determining a first aperture setting method corresponding to the first angle resolution in the angle resolution to aperture setting method correspondence table corresponding to the antenna array hardware configuration information of the first device based on a first selection criterion.

Here, the first selection criterion includes at least one of the following:

in a case that there is no angle prior information of the sensing object in the sensing request or accuracy of the angle prior information of the sensing object is greater than a first preset value, use of sparse array antennas is disabled;
in a case that the accuracy of the angle prior information of the sensing object is less than or equal to the first preset value, and the antenna array hardware configuration information of the first device meets a first condition, use priority of dense array antennas is set to be higher than that of sparse array antennas; and
in a case that the accuracy of the angle prior information of the sensing object is less than or equal to the first preset value, and the antenna array hardware configuration information of the first device does not meet the first condition, use of sparse array antennas is enabled.

Here, the first condition is that an antenna aperture created by continuously arranged available antenna array elements is greater than or equal to an antenna aperture in the aperture setting method.

Optionally, a method for the sensing function network element to obtain the second antenna aperture configuration information includes:

the sensing function network element obtains measurement quantities corresponding to a second echo signal of the first signal, where the second echo signal is received by the first device at a second moment; and
the sensing function network element determines the second antenna aperture configuration information based on the measurement quantities.

Optionally, the sensing function network element obtaining measurement quantities corresponding to a second echo signal of the first signal, where the second echo signal is received by the first device at a second moment includes at least one of the following:

the sensing function network element receives the measurement quantities corresponding to the second echo signal of the first signal received at the second moment, where the measurement quantities are sent by the first device;
the sensing function network element receives the second echo signal of the first signal received at the second moment, the second echo signal being sent by the first device, and performs radar signal processing on the second echo signal to determine the measurement quantities; and
the sensing function network element receives a first part of measurement quantities corresponding to the second echo signal of the first signal received at the second moment, the first part being sent by the first device, and based on the first part, obtains a second part of the measurement quantities, where the first part is a part in the measurement quantities that belongs to a first level among parts of different levels contained in the measurement quantities, and the second part is a part in the measurement quantities that belongs to a second level among the parts of different levels.

Optionally, the determining the second antenna aperture configuration information based on the measurement quantities includes:

determining, by the sensing function network element, the second antenna aperture configuration information based on distance and angle of the sensing object relative to the first device obtained from the measurement quantities; or
predicting, by the sensing function network element, distance and angle of the sensing object relative to the first device, and determining the second antenna aperture configuration information based on predicted values of the distance and angle of the sensing object relative to the first device.

Optionally, the determining the second antenna aperture configuration information based on distance and angle of the sensing object relative to the first device obtained from the measurement quantities includes:

the sensing function network element determines a distance and angle segment corresponding to the distance and angle of the sensing object relative to the first device obtained from the measurement quantities; and
the sensing function network element determines the second antenna aperture configuration information in a distance and angle segment to aperture setting correspondence table based on a second selection criterion and the distance and angle segment.

Here, the second selection criterion includes at least one of the following:

in a case that echo signal quality corresponding to the second echo signal received by the first device is greater than or equal to a second preset value, and the antenna array hardware configuration information of the first device meets the first condition, use priority of dense array antennas is set to be higher than that of sparse array antennas; in a case that the echo signal quality corresponding to the second echo signal received by the first device is greater than or equal to the second preset value, and the antenna array hardware configuration information of the first device does not meet the first condition, use of sparse array antennas is enabled; and

in a case that the echo signal quality corresponding to the second echo signal received by the first device is less than the second preset value, use of sparse array antennas is disabled.

Here, the first condition is that an antenna aperture created by continuously arranged available antenna array elements is greater than or equal to an antenna aperture in the aperture setting method.

Optionally, the determining the second antenna aperture configuration information based on predicted values of the distance and angle of the sensing object relative to the first device includes:

determining, by the sensing function network element, a distance and angle segment corresponding to the predicted values of the distance and angle of the sensing object relative to the first device; and

determining, by the sensing function network element, the second antenna aperture configuration information in a distance and angle segment to aperture setting correspondence table based on a third selection criterion and the distance and angle segment.

Here, the third selection criterion includes at least one of the following:

in a case that a predicted value of echo signal quality is greater than or equal to a third preset value, and the antenna array hardware configuration information of the first device meets the first condition, use priority of dense array antennas is set to be higher than that of sparse array antennas;

in a case that the predicted value of echo signal quality is greater than or equal to the third preset value, and the antenna array hardware configuration information of the first device does not meet the first condition, use of sparse array antennas is enabled; and

in a case that the predicted value of echo signal quality is less than the third preset value, use of sparse array antennas is disabled.

Here, the first condition is that an antenna aperture created by continuously arranged available antenna array elements is greater than or equal to an antenna aperture in the aperture setting method.

Optionally, in a case of multiple sensing objects, the determining the second antenna aperture configuration information includes:

determining second antenna aperture configuration information for each sensing object separately; or determining second antenna aperture configuration information that applies to multiple sensing objects.

Optionally, the sensing function network element indicates the antenna aperture configuration information in at least one of the following ways:

jointly encoding the aperture setting method and aperture offset value; and identifying the aperture setting method and aperture offset value with different bits.

Optionally, the aperture setting method includes at least one of the following:

antenna aperture;

antenna array arrangement method, where the antenna array arrangement method includes: dense array antenna or sparse array antenna; and

spacing between array elements.

It should be noted that this embodiment of this application is a method embodiment of the other side corresponding to the aforesaid first device side embodiment. All implementations on the first device side can be applicable to this sensing function network element embodiment, with the same technical effect achieved, and details are not repeated herein.

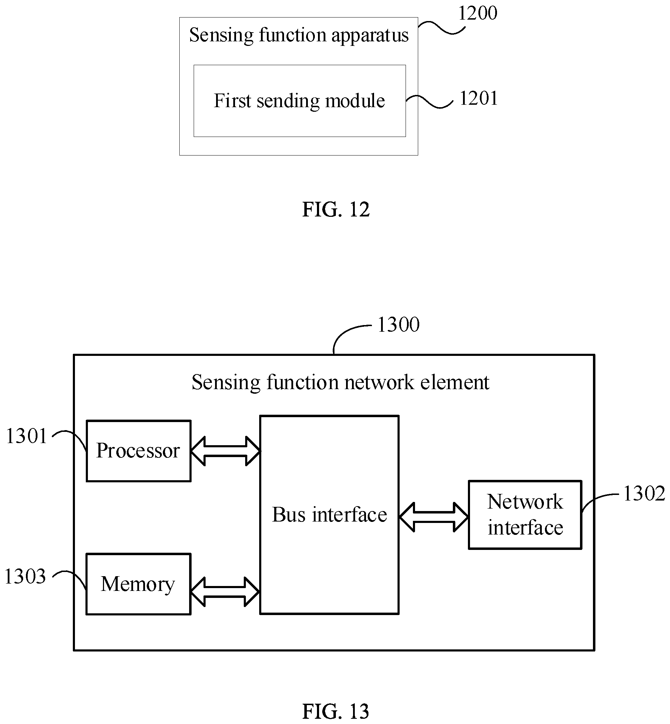

As shown in FIG. 12, an embodiment of this application provides a sensing configuration apparatus 1200 applied to a sensing function network element, including:

a first sending module 1201, configured to send antenna aperture configuration information to a first device.

The antenna aperture configuration information includes at least one of the following: first antenna aperture configuration information and second antenna aperture configuration information.

Optionally, the antenna aperture configuration information includes: an aperture setting method and an aperture offset value for a target direction.

The target direction includes at least one of the following: azimuth and pitch.

Optionally, a method of obtaining the first antenna aperture configuration information includes:
determining the first antenna aperture configuration information based on first information and antenna array hardware configuration information of the first device.

The first information includes at least one of the following:
an angle resolution requirement in a sensing request, a lateral resolution requirement for radar imaging, and an operational distance requirement for radar imaging.

Optionally, the determining the first antenna aperture configuration information based on first information and antenna array hardware configuration information of the first device includes:

determining a first angle resolution based on the first information;
determining a first aperture setting method in an angle resolution to aperture setting method correspondence table corresponding to the antenna array hardware configuration information of the first device based on the first angle resolution; and
determining an aperture offset value corresponding to the first aperture setting method based on the first aperture setting method and an occupancy situation of antenna array elements.

Optionally, the first angle resolution satisfies at least one of the following:

value of the first angle resolution is less than or equal to the angle resolution requirement in the sensing request; and
value of the first angle resolution is less than or equal to a ratio of the lateral resolution requirement for radar imaging to the operational distance requirement for radar imaging.

Optionally, a method of determining the first aperture setting method in the angle resolution to aperture setting method correspondence table corresponding to the antenna array hardware configuration information of the first device based on the first angle resolution includes:
determining a first aperture setting method corresponding to the first angle resolution in the angle resolution to aperture setting method correspondence table corresponding to the antenna array hardware configuration information of the first device based on a first selection criterion.

Here, the first selection criterion includes at least one of the following:

in a case that there is no angle prior information of the sensing object in the sensing request or accuracy of the angle prior information of the sensing object is greater than a first preset value, use of sparse array antennas is disabled;
in a case that the accuracy of the angle prior information of the sensing object is less than or equal to the first preset value, and the antenna array hardware configuration information of the first device meets a first condition, use priority of dense array antennas is set to be higher than that of sparse array antennas; and
in a case that the accuracy of the angle prior information of the sensing object is less than or equal to the first preset value, and the antenna array hardware configuration information of the first device does not meet the first condition, use of sparse array antennas is enabled.

Here, the first condition is that an antenna aperture created by continuously arranged available antenna array elements is greater than or equal to an antenna aperture in the aperture setting method.

Optionally, a method of obtaining the second antenna aperture configuration information includes:

the sensing function network element obtains measurement quantities corresponding to a second echo signal of the first signal, where the second echo signal is received by the first device at a second moment; and
the sensing function network element determines the second antenna aperture configuration information based on the measurement quantities.

Optionally, the obtaining measurement quantities corresponding to a second echo signal of the first signal, where the second echo signal is received by the first device at a second moment, includes at least one of the following:

receiving the measurement quantities corresponding to the second echo signal of the first signal received at the second moment, where the measurement quantities are sent by the first device;

receiving the second echo signal of the first signal received at the second moment, the second echo signal being sent by the first device, and performs radar signal processing on the second echo signal to determine the measurement quantities; and

receiving a first part of measurement quantities corresponding to the second echo signal of the first signal received at the second moment, the first part being sent by the first device, and based on the first part, obtaining a second part of the measurement quantities, where the first part is a part that belongs to a first level among parts of different levels contained in the measurement quantities, and the second part is a part in the measurement quantities that belongs to a second level among the parts of different levels.

Optionally, the determining the second antenna aperture configuration information based on the measurement quantities includes:

determining the second antenna aperture configuration information based on distance and angle of the sensing object relative to the first device obtained from the measurement quantities; or

predicting the distance and angle of the sensing object relative to the first device, and determining the second antenna aperture configuration information based on predicted values of the distance and angle of the sensing object relative to the first device.

Optionally, the determining the second antenna aperture configuration information based on distance and angle of the sensing object relative to the first device obtained from the measurement quantities includes:

determining a distance and angle segment corresponding to the distance and angle of the sensing object relative to the first device obtained from the measurement quantities; and

determining the second antenna aperture configuration information in a distance and angle segment to aperture setting correspondence table based on a second selection criterion and the distance and angle segment.

Here, the second selection criterion includes at least one of the following:

in a case that echo signal quality corresponding to the second echo signal received by the first device is greater than or equal to a second preset value, and the antenna array hardware configuration information of the first device meets the first condition, use priority of dense array antennas is set to be higher than that of sparse array antennas;

in a case that the echo signal quality corresponding to the second echo signal received by the first device is greater than or equal to the second preset value, and the antenna array hardware configuration information of the first device does not meet the first condition, use of sparse array antennas is enabled; and

in a case that the echo signal quality corresponding to the second echo signal received by the first device is less than the second preset value, use of sparse array antennas is disabled.

Here, the first condition is that an antenna aperture created by continuously arranged available antenna array elements is greater than or equal to an antenna aperture in the aperture setting method.

Optionally, the determining the second antenna aperture configuration information based on predicted values of the distance and angle of the sensing object relative to the first device includes:

determining a distance and angle segment corresponding to the predicted values of the distance and angle of the sensing object relative to the first device; and

determining the second antenna aperture configuration information in a distance and angle segment to aperture setting correspondence table based on a third selection criterion and the distance and angle segment.

Here, the third selection criterion includes at least one of the following:

in a case that a predicted value of echo signal quality is greater than or equal to a third preset value, and the antenna array hardware configuration information of the first device meets the first condition, use priority of dense array antennas is set to be higher than that of sparse array antennas;

in a case that the predicted value of echo signal quality is greater than or equal to the third preset value, and the antenna array hardware configuration information of the first device does not meet the first condition, use of sparse array antennas is enabled; and

in a case that the predicted value of echo signal quality is less than the third preset value, use of sparse array antennas is disabled.

Here, the first condition is that an antenna aperture created by continuously arranged available antenna array elements is greater than or equal to an antenna aperture in the aperture setting method.

Optionally, in a case of multiple sensing objects, the determining the second antenna aperture configuration information includes:

determining second antenna aperture configuration information for each sensing object separately; or
determining second antenna aperture configuration information that applies to multiple sensing objects.

Optionally, the antenna aperture configuration information is indicated in at least one of the following ways:

jointly encoding the aperture setting method and aperture offset value; and
identifying the aperture setting method and aperture offset value with different bits.

Optionally, the aperture setting method includes at least one of the following:

antenna aperture;
antenna array arrangement method, where the antenna array arrangement method includes: dense array antenna or sparse array antenna; and
spacing between array elements.

It should be noted that this apparatus embodiment is an apparatus corresponding to the aforesaid method. All processes and implementations in the foregoing method embodiment can be applicable to this apparatus embodiment, with the same technical effect achieved, and details are not repeated herein.

Optionally, an embodiment of this application further provides a communication device. The communication device is a sensing function network element including a processor, a memory, and a program or instructions stored in the memory and runnable on the processor, where when the program or instructions are executed by the processor, the processes of the sensing configuration method embodiment applicable to the sensing function network element side are implemented, with the same technical effects achieved. To avoid repetition, details are not further described herein.

An embodiment of this application further provides a readable storage medium, where the computer readable storage medium stores a program or instructions, and when the program or instructions are executed by a processor, the processes of the sensing configuration method embodiment applicable to the sensing function network element side are implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a communication device. The communication device is a sensing function network element, including a processor and a communication interface, where the communication interface is configured to send antenna aperture configuration information to a first device.

The antenna aperture configuration information includes at least one of the following: first antenna aperture configuration information and second antenna aperture configuration information.

This sensing function network element embodiment corresponds to the foregoing method embodiment on the sensing function network element side. All processes and implementations in the foregoing method embodiment can be applicable to this sensing function network element embodiment, with the same technical effect achieved.

Specifically, an embodiment of this application further provides a sensing function network element. As shown in FIG. 13, the sensing function network element 1300 includes a processor 1301, a network interface 1302, and a memory 1303. The network interface 1302 is, for example, a common public radio interface (Common Public Radio Interface, CPRI).

Specifically, the sensing function network element 1300 in the embodiments of this application further includes: instructions or a program stored in the memory 1303 and runnable on the processor 1301. The processor 1301 invokes the instructions or program in the memory 1303 to execute the method executed by the modules shown in FIG. 12, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing sensing configuration method embodiment are implemented, with the same technical effects achieved. To avoid repetition, details are not described herein again.

The processor is a processor in the sensing function network element described in the foregoing embodiment. The readable storage medium includes a computer-readable storage medium such as a computer read-only memory ROM, a random access memory RAM, a magnetic disk, or an optical disc.

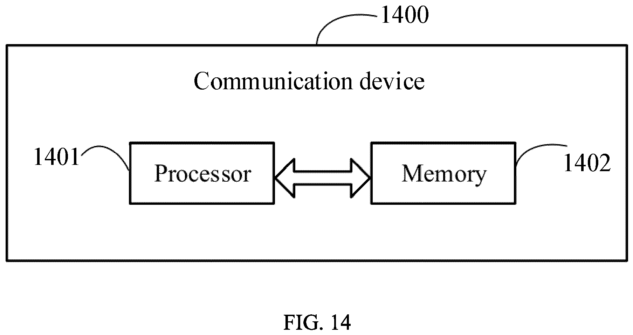

Optionally, as shown in FIG. 14, an embodiment of this application further provides a communication device 1400 including a processor 1401 and a memory 1402. The memory 1402 stores a program or instructions capable of running on the processor 1401. For example, if the communication device 1400 is a first device, when the program or instructions are executed by the processor 1401, the steps of the foregoing embodiment of the sensing method are implemented, with the same technical effects achieved. If the communications device 1400 is a sensing function network element, the program or instructions are executed by the processor 1401 to implement the processes of the foregoing sensing configuration method embodiment, with the same technical effects achieved. To avoid repetition, details are not described herein again.

Another embodiment of this application provides a chip, where the chip includes a processor and a communication interface, the communication interface is coupled to the processor, and the processor is configured to run a program or instructions to implement the processes of the foregoing sensing or sensing configuration embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a storage medium. When the computer program product is executed by at least one processor, the processes of the foregoing sensing or sensing configuration method embodiment are implemented, with the same technical effects achieved. To avoid repetition, details are not described herein again.

An embodiment of this application further provides a communication system, including a first device and a sensing function network element. The first device can be configured to execute the steps of the foregoing sensing method, and the sensing function network element can be configured to execute the steps of the foregoing sensing configuration method.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A sensing method, comprising:

   receiving, by a first device, a first echo signal of a first signal at a first moment based on first antenna aperture configuration information, wherein the first echo signal is sent by a second device;
   obtaining, by the first device, second antenna aperture configuration information based on a second echo signal at a second moment, in a case of determining based on the first echo signal that a sensing object is found; and
   receiving, by the first device, a third echo signal of the first signal at a third moment based on the second antenna aperture configuration information, wherein the third echo signal is sent by the second device; wherein

the second moment is the same as the first moment or after the first moment; and the third moment is a moment after the second moment.

2. The method according to claim 1, wherein the first antenna aperture configuration information and the second antenna aperture configuration information comprise: an aperture setting method and an aperture offset value for a target direction; wherein
the target direction comprises at least one of the following: azimuth and pitch.

3. The method according to claim 2, wherein the first antenna aperture configuration information is obtained in at least one of the following ways:

   the first device determines the first antenna aperture configuration information based on first information and antenna array hardware configuration information of the first device, wherein the first information comprises at least one of the following: an angle resolution requirement in a sensing request, a lateral resolution requirement for radar imaging, and an operational distance requirement for radar imaging;
   the first device determines the first antenna aperture configuration information based on an antenna aperture recommendation value sent by the second device and the antenna array hardware configuration information of the first device; and
   the first device receives the first antenna aperture configuration information sent by a sensing function network element.

4. The method according to claim 3, wherein the determining the first antenna aperture configuration information based on first information and antenna array hardware configuration information of the first device comprises:

   determining a first angle resolution based on the first information;
   determining a first aperture setting method in an angle resolution to aperture setting method correspondence table corresponding to the antenna array hardware configuration information of the first device based on the first angle resolution; and
   determining an aperture offset value corresponding to the first aperture setting method based on the first aperture setting method and an occupancy situation of antenna array elements.

5. The method according to claim 4, wherein the first angle resolution satisfies at least one of the following:

   value of the first angle resolution is less than or equal to the angle resolution requirement in the sensing request; and
   value of the first angle resolution is less than or equal to a ratio of the lateral resolution requirement for radar imaging to the operational distance requirement for radar imaging.

6. The method according to claim 4, wherein the determining a first aperture setting method in an angle resolution to aperture setting method correspondence table corresponding to the antenna array hardware configuration information of the first device based on the first angle resolution comprises:

   determining a first aperture setting method corresponding to the first angle resolution in the angle resolution to aperture setting method correspondence table corresponding to the antenna array hardware configuration information of the first device based on a first selection criterion; wherein
   the first selection criterion comprises at least one of the following:

      in a case that there is no angle prior information of the sensing object in the sensing request or accuracy of the angle prior information of the sensing object is greater than a first preset value, use of sparse array antennas is disabled;
      in a case that the accuracy of the angle prior information of the sensing object is less than or equal to the first preset value, and the antenna array hardware configuration information of the first device meets a first condition, use priority of dense array antennas is set to be higher than that of sparse array antennas; and
      in a case that the accuracy of the angle prior information of the sensing object is less than or equal to the first preset value, and the antenna array hardware configuration information of the first device does not meet the first condition, use of sparse array antennas is enabled; wherein
      the first condition is that an antenna aperture created by continuously arranged available antenna array elements is greater than or equal to an antenna aperture in the aperture setting method.

7. The method according any one of claims 1 to 6, wherein the obtaining second antenna aperture configuration information based on a second echo signal at a second moment comprises:

   executing, by the first device, a first operation; and
   receiving, by the first device, second antenna aperture configuration information fed back by a sensing function network element; wherein
   the first operation comprises one of the following:

      performing radar signal processing on the second echo signal received at the second moment to determine measurement quantities and sending the measurement quantities to the sensing function network element; sending the second echo signal received at the second moment to the sensing function network element; and performing part of calculations in radar signal processing on the second echo signal received at the second moment to obtain a first part of measurement quantities and sends the first part to the sensing function network element, wherein the first part is a part that belongs to a first level among parts of different levels contained in the measurement quantities.

8. The method according any one of claims 1 to 6, wherein the obtaining second antenna aperture configuration information based on a second echo signal at a second moment comprises:

   performing, by the first device, radar signal processing on the second echo signal received at the second moment to determine measurement quantities; and
   determining the second antenna aperture configuration information based on the measurement quantities.

9. The method according to claim 8, wherein the determining the second antenna aperture configuration information based on the measurement quantities comprises:

   determining, by the first device, the second antenna aperture configuration information based on distance and angle of the sensing object relative to the first device obtained from the measurement quantities; or
   predicting, by the first device, distance and angle of the sensing object relative to the first device, and determining the second antenna aperture configuration information based on predicted values of the distance and angle of the sensing object relative to the first device.

10. The method according to claim 9, wherein the determining the second antenna aperture configuration information based on distance and angle of the sensing object relative to the first device obtained from the measurement quantities comprises:

   determining, by the first device, a distance and angle segment corresponding to the distance and angle of the sensing object relative to the first device obtained from the measurement quantities; and
   determining, by the first device, the second antenna aperture configuration information in a distance and angle segment to aperture setting correspondence table based on a second selection criterion and the distance and angle segment; wherein
   the second selection criterion comprises at least one of the following:

      in a case that echo signal quality corresponding to the second echo signal is greater than or equal to a second preset value, and the antenna array hardware configuration information of the first device meets the first condition, use priority of dense array antennas is set to be higher than that of sparse array antennas;
      in a case that the echo signal quality corresponding to the second echo signal is greater than or equal to the second preset value, and the antenna array hardware configuration information of the first device does not meet the first condition, use of sparse array antennas is enabled; and
      in a case that the echo signal quality corresponding to the second echo signal is less than the second preset value, use of sparse array antennas is disabled; wherein
      the first condition is that an antenna aperture created by continuously arranged available antenna array elements is greater than or equal to an antenna aperture in the aperture setting method.

11. The method according to claim 9, wherein the determining the second antenna aperture configuration information based on predicted values of the distance and angle of the sensing object relative to the first device comprises:

   determining, by the first device, a distance and angle segment corresponding to the predicted values of the distance and angle of the sensing object relative to the first device; and
determining, by the first device, the second antenna aperture configuration information in a distance and angle segment to aperture setting correspondence table based on a third selection criterion and the distance and angle segment; wherein
the third selection criterion comprises at least one of the following:

in a case that a predicted value of echo signal quality is greater than or equal to a third preset value, and the antenna array hardware configuration information of the first device meets the first condition, use priority of dense array antennas is set to be higher than that of sparse array antennas;
in a case that the predicted value of echo signal quality is greater than or equal to the third preset value, and the antenna array hardware configuration information of the first device does not meet the first condition, use of sparse array antennas is enabled; and
in a case that the predicted value of echo signal quality is less than the third preset value, use of sparse array antennas is disabled; wherein
the first condition is that an antenna aperture created by continuously arranged available antenna array elements is greater than or equal to an antenna aperture in the aperture setting method.

12. The method according to claim 10 or 11, wherein the echo signal quality comprises at least one of the following: echo signal power, echo signal noise ratio SNR, echo signal interference noise ratio SINR, echo signal reference signal received power RSRP, and echo signal reference signal received quality RSRQ.

13. The method according to claim 8, wherein in a case of multiple sensing objects, the determining the second antenna aperture configuration information comprises:

determining second antenna aperture configuration information for each sensing object separately; or
determining second antenna aperture configuration information that applies to multiple sensing objects.

14. The method according to claim 3, 4, 6, 10, or 11, wherein the antenna array hardware configuration information comprises:
numbers of array elements in azimuth and pitch of the antenna array, spacing between array elements, and indexes of available antenna array elements.

15. The method according to claim 3 or 7, wherein in a case that the antenna aperture configuration information is sent by a sensing function network element, the sensing function network element indicates the antenna aperture configuration information in at least one of the following ways:

jointly encoding the aperture setting method and aperture offset value; and
identifying the aperture setting method and aperture offset value with different bits; wherein
the antenna aperture configuration information is the first antenna aperture configuration information or the second antenna aperture configuration information.

16. The method according to claim 2, wherein the aperture setting method comprises at least one of the following:

antenna aperture;
antenna array arrangement method, wherein the antenna array arrangement method comprises: dense array antenna or sparse array antenna; and
spacing between array elements.

17. A sensing configuration method, comprising:

sending, by a sensing function network element, antenna aperture configuration information to a first device; wherein
the antenna aperture configuration information comprises at least one of the following: first antenna aperture configuration information and second antenna aperture configuration information.

18. The method according to claim 17, wherein the antenna aperture configuration information comprises: an aperture setting method and an aperture offset value for a target direction; wherein
the target direction comprises at least one of the following: azimuth and pitch.

19. The method according to claim 18, wherein the sensing function network element obtains the first antenna aperture configuration information in a way comprising:

the sensing function network element determining the first antenna aperture configuration information based on first information and antenna array hardware configuration information of the first device; wherein
the first information comprises at least one of the following:
an angle resolution requirement in a sensing request, a lateral resolution requirement for radar imaging, and an operational distance requirement for radar imaging.

20. The method according to claim 19, wherein the determining the first antenna aperture configuration information based on first information and antenna array hardware configuration information of the first device comprises:

determining a first angle resolution based on the first information;
determining a first aperture setting method in an angle resolution to aperture setting method correspondence table corresponding to the antenna array hardware configuration information of the first device based on the first angle resolution; and
determining a first aperture offset value corresponding to the first aperture setting method based on the first aperture setting method and an occupancy situation of antenna array elements.

21. The method according to claim 20, wherein the first angle resolution satisfies at least one of the following:

value of the first angle resolution is less than or equal to the angle resolution requirement in the sensing request; and
value of the first angle resolution is less than or equal to a ratio of the lateral resolution requirement for radar imaging to the operational distance requirement for radar imaging.

22. The method according to claim 20, wherein the determining a first aperture setting method in an angle resolution to aperture setting method correspondence table corresponding to the antenna array hardware configuration information of the first device based on the first angle resolution comprises:

determining a first aperture setting method corresponding to the first angle resolution in the angle resolution to aperture setting method correspondence table corresponding to the antenna array hardware configuration information of the first device based on a first selection criterion; wherein
the first selection criterion comprises at least one of the following:

in a case that there is no angle prior information of the sensing object in the sensing request or accuracy of the angle prior information of the sensing object is greater than a first preset value, use of sparse array antennas is disabled;
in a case that the accuracy of the angle prior information of the sensing object is less than or equal to the first preset value, and the antenna array hardware configuration information of the first device meets a first condition, use priority of dense array antennas is set to be higher than that of sparse array antennas; and
in a case that the accuracy of the angle prior information of the sensing object is less than or equal to the first preset value, and the antenna array hardware configuration information of the first device does not meet the first condition, use of sparse array antennas is enabled; wherein
the first condition is that an antenna aperture created by continuously arranged available antenna array elements is greater than or equal to an antenna aperture in the aperture setting method.

23. The method according to any one of claims 17 to 22, wherein the sensing function network element obtains the second antenna aperture configuration information in a way comprising:

the sensing function network element obtaining measurement quantities corresponding to a second echo signal of the first signal, wherein the second echo signal is received by the first device at a second moment; and
the sensing function network element determining the second antenna aperture configuration information based on the measurement quantities.

24. The method according to claim 23, wherein the sensing function network element obtaining measurement quantities corresponding to a second echo signal of the first signal, wherein the second echo signal is received by the first device at a second moment, comprises at least one of the following:

the sensing function network element receiving the measurement quantities corresponding to the second echo signal of the first signal received at the second moment, wherein the measurement quantities are sent by the first device;

the sensing function network element receiving the second echo signal of the first signal received at the second moment, the second echo signal being sent by the first device, and performing radar signal processing on the second echo signal to determine the measurement quantities; and

the sensing function network element receiving a first part of measurement quantities corresponding to the second echo signal of the first signal received at the second moment, the first part being sent by the first device, and based on the first part, obtaining a second part of the measurement quantities, wherein the first part is a part that belongs to a first level among parts of different levels contained in the measurement quantities, and the second part is a part in the measurement quantities that belongs to a second level among the parts of different levels.

25. The method according to claim 24, wherein the determining the second antenna aperture configuration information based on the measurement quantities comprises:

determining, by the sensing function network element, the second antenna aperture configuration information based on distance and angle of the sensing object relative to the first device obtained from the measurement quantities; or

predicting, by the sensing function network element, the distance and angle of the sensing object relative to the first device, and determining the second antenna aperture configuration information based on predicted values of the distance and angle of the sensing object relative to the first device.

26. The method according to claim 25, wherein the determining the second antenna aperture configuration information based on distance and angle of the sensing object relative to the first device obtained from the measurement quantities comprises:

determining, by the sensing function network element, a distance and angle segment corresponding to the distance and angle of the sensing object relative to the first device obtained from the measurement quantities; and

determining, by the sensing function network element, the second antenna aperture configuration information in a distance and angle segment to aperture setting correspondence table based on a second selection criterion and the distance and angle segment; wherein

the second selection criterion comprises at least one of the following:

in a case that echo signal quality corresponding to the second echo signal received by the first device is greater than or equal to a second preset value, and the antenna array hardware configuration information of the first device meets the first condition, use priority of dense array antennas is set to be higher than that of sparse array antennas;

in a case that the echo signal quality corresponding to the second echo signal received by the first device is greater than or equal to the second preset value, and the antenna array hardware configuration information of the first device does not meet the first condition, use of sparse array antennas is enabled; and

in a case that the echo signal quality corresponding to the second echo signal received by the first device is less than the second preset value, use of sparse array antennas is disabled; wherein

the first condition is that an antenna aperture created by continuously arranged available antenna array elements is greater than or equal to an antenna aperture in the aperture setting method.

27. The method according to claim 25, wherein the determining the second antenna aperture configuration information based on predicted values of the distance and angle of the sensing object relative to the first device comprises:

determining, by the sensing function network element, a distance and angle segment corresponding to the predicted values of the distance and angle of the sensing object relative to the first device; and

determining, by the sensing function network element, the second antenna aperture configuration information in a distance and angle segment to aperture setting correspondence table based on a third selection criterion and the distance and angle segment; wherein

the third selection criterion comprises at least one of the following:

in a case that a predicted value of echo signal quality is greater than or equal to a third preset value, and the antenna array hardware configuration information of the first device meets the first condition, use priority of dense array antennas is set to be higher than that of sparse array antennas;
in a case that the predicted value of echo signal quality is greater than or equal to the third preset value, and the antenna array hardware configuration information of the first device does not meet the first condition, use of sparse array antennas is enabled; and
in a case that the predicted value of echo signal quality is less than the third preset value, use of sparse array antennas is disabled; wherein
the first condition is that an antenna aperture created by continuously arranged available antenna array elements is greater than or equal to an antenna aperture in the aperture setting method.

28. The method according to claim 23, wherein in a case of multiple sensing objects, the determining the second antenna aperture configuration information comprises:

determining second antenna aperture configuration information for each sensing object separately; or
determining second antenna aperture configuration information that applies to multiple sensing objects.

29. The method according to claim 18, wherein the sensing function network element indicates the antenna aperture configuration information in at least one of the following ways:

jointly encoding the aperture setting method and aperture offset value; and
identifying the aperture setting method and aperture offset value with different bits.

30. The method according to claim 29, wherein the aperture setting method comprises at least one of the following:

antenna aperture;
antenna array arrangement method, wherein the antenna array arrangement method comprises: dense array antenna or sparse array antenna; and
spacing between array elements.

31. A sensing apparatus, applied to a first device, comprising:

a first receiving module, configured to receive a first echo signal of a first signal at a first moment based on first antenna aperture configuration information, wherein the first echo signal is sent by a second device;
a first obtaining module, configured to obtain second antenna aperture configuration information based on a second echo signal at a second moment, in a case of determining based on the first echo signal that a sensing object is found; and
a second receiving module, configured to receive a third echo signal of the first signal at a third moment based on the second antenna aperture configuration information, wherein the third echo signal is sent by the second device; wherein
the second moment is the same as the first moment or after the first moment; and the third moment is a moment after the second moment.

32. A communication device, comprising a processor and a memory, wherein the memory stores a program or instructions runnable on the processor, and when the program or instructions are executed by the processor, the steps of the sensing method according to any one of claims 1 to 16 are implemented.

33. A sensing configuration apparatus, applied to a sensing function network element, comprising:

a first sending module, configured to send antenna aperture configuration information to a first device; wherein the antenna aperture configuration information comprises at least one of the following: first antenna aperture configuration information and second antenna aperture configuration information.

34. A communication device, the communication device being a sensing function network element and comprising a processor and a memory, wherein the memory stores a program or instructions runnable on the processor, and when the program or instructions are executed by the processor, the steps of the sensing configuration method according to any one of claims 17 to 30 are implemented.

35. A readable storage medium, wherein the readable storage medium stores a program or instructions, and when the program or instructions are executed by a processor, the steps of the sensing method according to any one of claims 1 to 16 are implemented, or the steps of the sensing configuration method according to any one of claims 17 to 30 are implemented.

12

Core network
device

Access
network device

11

Terminal

FIG. 1

```
                          ┌───────────┐
                        ◁   Start      ▷
                          └─────┬─────┘
                                ▼
┌──────────────────────────────────────────────────┐
│ A first device receives a first echo signal of a  │
│ first signal at a first moment based on first      │ ⟿ 201
│ antenna aperture configuration information, where  │
│ the first echo signal is sent by a second device   │
└──────────────────────────────────────────────────┘
                                ▼
┌──────────────────────────────────────────────────┐
│ The first device obtains second antenna aperture   │
│ configuration information based on a second echo    │ ⟿ 202
│ signal at a second moment, in a case of determining │
│ based on the first echo signal that a sensing       │
│ object is found                                     │
└──────────────────────────────────────────────────┘
                                ▼
┌──────────────────────────────────────────────────┐
│ The first device receives a third echo signal of   │
│ the first signal at a third moment based on the     │ ⟿ 203
│ second antenna aperture configuration information,  │
│ where the third echo signal is sent by the second   │
│ device                                              │
└──────────────────────────────────────────────────┘
                                ▼
                          ╭───────────╮
                          │    End     │
                          ╰───────────╯
```

FIG. 2

Sparse array                 Dense array

2-element
sparse array

Equivalent to

3-element
sparse array

4-element
sparse array

Antenna array
elements used

Antenna array
elements not used

FIG. 3

Target
signal

CFAR
threshold

Noise measurement
interval

Noise measurement
interval

FIG. 4

Sensing function
network element

Base station ←→ Terminal

FIG. 5

Sensing function
network element

Base station

Terminal

FIG. 6

Sensing function
network element

Base
station/terminal ←→ Terminal/base
station

FIG. 7

**FIG. 8**

FIG. 9

1000

1001

First device

1004 Processor

1002 Radio frequency apparatus

Bus interface

1005 Memory

1003 Baseband apparatus

Network interface

1006

FIG. 10

Start

A sensing function network element sends antenna aperture configuration information to a first device

1101

End

FIG. 11

Sensing function apparatus ⌐1200

First sending module ⌐1201

FIG. 12

1300

Sensing function network element

1301 ⌐ Processor ⟷ Bus interface ⟷ Network interface ⌐1302

1303 ⌐ Memory ⟷

FIG. 13

1400

Communication device

1401 | Processor ⟷ Memory | 1402

FIG. 14

## INTERNATIONAL SEARCH REPORT

| International application No. |
| --- |
| **PCT/CN2022/139837** |

| A. | CLASSIFICATION OF SUBJECT MATTER |
| --- | --- |
| | H04B1/04(2006.01)i |

According to International Patent Classification (IPC) or to both national classification and IPC

| B. | FIELDS SEARCHED |
| --- | --- |

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 感知, 配置, 天线孔径配置信息, 第一, 第二, 天线, 孔径, 配置信息, 回波信号, 时刻, 自适应, 雷达, 信息, 时间, configuration, antenna aperture configuration information, first, second, antenna, aperture, configuration information, echo signal, adaptive, radar, sensing, information, time

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 106575970 A (APPLE INC.) 19 April 2017 (2017-04-19) description, paragraphs [0016]-[0105], figures 1-9, and claims 1-20 | 17-30, 33-35 |
| X | CN 109121443 A (HUAWEI TECHNOLOGIES CO., LTD.) 01 January 2019 (2019-01-01) description, paragraphs [0016]-[0070], figures 1-5, and claims 1-20 | 17-30, 33-35 |
| A | CN 105580200 A (TELEFONAKTIEBOLAGET LM ERICSSON (PUBL)) 11 May 2016 (2016-05-11) entire document | 1-35 |
| A | US 2020103495 A1 (PANASONIC INTELLECTUAL PROPERTY MANAGEME CO., LTD.) 02 April 2020 (2020-04-02) entire document | 1-35 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 February 2023** | **22 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/139837**

| Patent document cited in search report | | | Publication date (day/month/year) | Patent family member(s) | | | Publication date (day/month/year) |
|---|---|---|---|---|---|---|---|
| CN | 106575970 | A | 19 April 2017 | US | 2015372656 | A1 | 24 December 2015 |
| | | | | US | 9444425 | B2 | 13 September 2016 |
| | | | | KR | 20160147975 | A | 23 December 2016 |
| | | | | KR | 101900174 | B1 | 18 September 2018 |
| | | | | WO | 2015195269 | A1 | 23 December 2015 |
| | | | | DE | 112015002917 | T5 | 06 April 2017 |
| CN | 109121443 | A | 01 January 2019 | US | 2021135350 | A1 | 06 May 2021 |
| | | | | US | 11211698 | B2 | 28 December 2021 |
| | | | | JP | 2019514261 | A | 30 May 2019 |
| | | | | JP | 6828984 | B2 | 10 February 2021 |
| | | | | US | 2020021018 | A1 | 16 January 2020 |
| | | | | US | 10637138 | B2 | 28 April 2020 |
| | | | | US | 2017346178 | A1 | 30 November 2017 |
| | | | | US | 10312582 | B2 | 04 June 2019 |
| | | | | EP | 3417511 | A1 | 26 December 2018 |
| | | | | EP | 3417511 | B1 | 08 September 2021 |
| | | | | RU | 2705661 | C1 | 11 November 2019 |
| | | | | WO | 2017202313 | A1 | 30 November 2017 |
| | | | | US | 2020220258 | A1 | 09 July 2020 |
| | | | | US | 10797387 | B2 | 06 October 2020 |
| | | | | EP | 3965229 | A1 | 09 March 2022 |
| | | | | AU | 2017270872 | A1 | 11 October 2018 |
| | | | | AU | 2017270872 | B2 | 30 April 2020 |
| | | | | AU | 2020207855 | A1 | 13 August 2020 |
| | | | | AU | 2020207855 | B2 | 16 September 2021 |
| | | | | KR | 20180117197 | A | 26 October 2018 |
| | | | | KR | 102079073 | B1 | 19 February 2020 |
| CN | 105580200 | A | 11 May 2016 | EP | 3053222 | A1 | 10 August 2016 |
| | | | | US | 2016218427 | A1 | 28 July 2016 |
| | | | | US | 10283861 | B2 | 07 May 2019 |
| | | | | WO | 2015048998 | A1 | 09 April 2015 |
| US | 2020103495 | A1 | 02 April 2020 | US | 11448725 | B2 | 20 September 2022 |
| | | | | DE | 102019125973 | A1 | 02 April 2020 |
| | | | | CN | 110967671 | A | 07 April 2020 |
| | | | | JP | 2020056780 | A | 09 April 2020 |

Form PCT/ISA/210 (patent family annex) (July 2022)

**EP 4 456 438 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111580765